# EUROPEAN PATENT APPLICATION

(11) **EP 2 957 601 A1**
(43) Date of publication of application: **23.12.2015**
(21) Application number: 14751007.7
(22) Date of filing: 13.02.2014
(51) Int. Cl.: C08L 101/00, C08K 3/28, C08K 5/521, C08L 33/00, C08L 75/04, C08L 79/08, C08L 81/02, C08L 83/04

(54) **RESIN COMPOSITION AND METHOD FOR PRODUCING SAME, AND HIGHLY THERMALLY CONDUCTIVE RESIN MOLDED ARTICLE**

(30) Priority: 13.02.2013 JP 2013025401
(71) Applicant: Tokuyama Corporation, Shunan-shi, Yamaguchi-ken 745-8648 (JP)
(72) Inventor: OHNO, Hideki, Shunan-shi Yamaguchi 745-8648 (JP)
(74) Representative: Schlief, Thomas P.
(86) International application number: PCT/JP2014/053306
(87) International publication number: WO 2014/126141

(57) **Abstract**

[Problem] To obtain high thermal conductivity and reduce thermal resistance at the filler-resin interface in a heat-dissipating composite material using aluminum nitride as the filler. [Solution] A resin composition containing aluminum nitride particles, a heat-curable resin or a thermoplastic resin, and an alkyl acid phosphate having a specific structure is produced by mixing the aluminum nitride particles, the heat-curable resin or thermoplastic resin, and the alkyl acid phosphate having the specific structure. Molding and curing the resin composition makes it possible to obtain a resin-molded article having high thermal conductivity.

## Description

### TECHNICAL FIELD

The present invention relates to a resin composition comprising high thermal conductivity.

### DESCRIPTION OF THE RELATED ART

Recently, with the increase of power density of semiconductor devices the heat dissipating materials are required to have improved heat dissipation. The production of thermal interface materials, which realize heat dissipation of the devices, is rapidly growing. The thermal interface materials are the materials which reduce thermal resistance between semiconductor devices and heat sinks or housings or so; and they are used in various forms such as sheet, gel, and grease or so. In general, this thermal interface materials are composite materials wherein thermally conductive fillers are dispersed in resins such as epoxy or silicone or so; and as the filler, silica and alumina or so are widely used. However, the thermal conductivity of the silica and alumina is 1 W/mK and 30 W/mK or so respectively; and even the composite materials using alumina, the thermal conductivity thereof remains at 1 to 3 W/mK or so.

However, as mentioned in above, recently, with the increase of power density of semiconductor devices, thermal interface materials are required to have further enhanced heat dissipating characteristic.

Thus, recently, the thermal interface materials, which use the inorganic powder of nitrides such as boron nitride or aluminum nitride as the filler, are expanding market share. This is because, the stronger bonding force between the metal cations and anions in nitrides compared to the oxides such as silica and alumina, allows easier phonon conductance, resulting in better thermal conductivity. Note that, the nitrides have lower affinity with resins unlike the oxides such as silica and alumina, thus high filler content in resins is not possible. Furthermore, due to the low affinity, the thermal resistance at the filler resin interface is greater; thus the composite materials having sufficient thermal conductivity haves not been achieved till today.

In general, the thermal conductivity of the resin filled with the inorganic powder increases with the filler content of the inorganic powder, and it is well known that the curve thereof will have steeper slope as the filler content increases. Therefore, in order to obtain highly thermally conductive resins, it is necessary to disperse large amount of highly thermally conductive inorganic powder in the resin, and in or der to carry this out, it is necessary to suppress the viscosity of the resin low, even when the inorganic powder is increased. Conventionally, various idea has been carried out for this purpose. For example, combining spherical particles with different particle diameters (for example Patent document 1), adding a solvent with high boiling point (for example Patent document 2), and adding specific phosphate to polyarylenesulfide (Patent document 3) or so may be mentioned. However, when the aforementioned two formers are applied to the resin such as silicone or so, the problem of the thermal resistance at the resin-filler boundary cannot be solved, and the effect of improving of the thermal conductivity was insufficient. Also, the compound listed as the example of the above mentioned specific phosphates was triesters, and according to the examination by the present inventors, such compound did not necessarily have good affinity with aluminum nitride.

Further, the surface of aluminum nitride reacts with water resulting in hydrolysis, thereby ammonia and aluminum hydroxide were generated. In order to solve this problem, there is an art (Patent document 4) of providing the water resistance to the aluminum nitride by treating in advance with organic phosphoric acid based coupling agent or so made by acidic phosphate, however the treating method described in said document was insufficient for improving the thermal conductivity of the composite resin.

### PRIOR ARTS

[Patent document 1] Japanese Patent Application Laid Open No.2005-320479
[Patent document 2] Japanese Patent Application Laid Open No. H10-173097
[Patent document 3] Japanese Patent Application Laid Open No.2004-182983
[Patent document 4] Japanese Patent Application Laid Open No.H07-33415

### DISCLOSURE OF INVENTION

### PROBLEM TO BE SOLVED BY THE INVENTION

As aforementioned, in case of using aluminum nitride as the heat-dissipating composite material, the method of reducing the thermal resistance at the filler-resin interface and thereby realizing the high thermal conductivity is demanded.

### MEANS FOR SOLVING THE PROBLEM

The present inventors has carried out keen examination for the means to improve the affinity between the aluminum nitride and resin in order to realize the heat-dissipating composite material having high thermal conductivity. As a result, into the heat-curable resin and thermoplastic resin, by adding acidic phosphate having specific structure when mixing the aluminum nitride particles and the resins, then the affinity between the aluminum nitride particles and the resins can be enhanced, and the thermal conductivity of the composite material can be improved, thereby the present invention was attained.

That is, the present invention is the resin composition comprising an aluminum nitride particles, a heat-curable resin or a thermoplastic resin, and acidic phosphate expressed by below general formula (1), wherein said resin composition is produced by mixing the aluminum nitride particle, the heat-curable resin or the thermoplastic resin and the acidic phosphate expressed by the following general formula (1), the production method of said resin composition, and the highly thermally conductive resin article made by shaping and curing said resin composition. 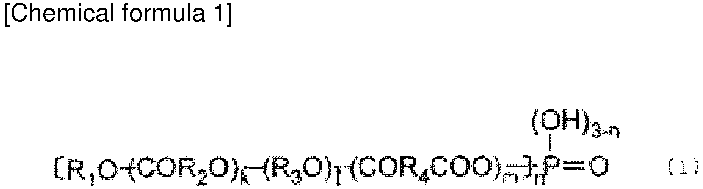 (in the above formula,
R₁: Saturated or unsaturated hydrocarbon group having carbon atoms of 4 to 20
R₂: Saturated hydrocarbon group having carbon atoms of 1 to 20
R₃: Saturated hydrocarbon group having carbon atoms of 2 or 3
R₄: Saturated or unsaturated hydrocarbon group having carbon atoms of 1 to 8
k: Integer of 0 to 20
I: Integer of 0 to 20
m: Integer of 0 to 20
n: 1 or 2, wherein
in case R₁, R₂, R₃ and R₄ are respectively present in plurality, then plurality of R₁, R₂, R₃ and R₄ may be the same or different groups respectively)

### EFFECT OF THE PRESENT INVENTION

The resin composition with low viscosity can be obtained according to the present invention, also by shaping and curing the resin composition of the present invention, and the resin article having high thermal conductivity can be obtained. This highly thermally conductive resin article has wide range of use in the application such as LED, CPU and power semiconductor or so.

### EMBODIMENT OF CARRYING OUT THE INVENTION

The aluminum nitride particles used in the present invention are not particularly limited, and known aluminum nitride particles can be used. The production method thereof may be any of a direct nitridation method, a carbothermal nitridation method, a vapor phase deposition method or so. The average particle diameter of the aluminum nitride particles are not particularly limited, and those having 10 nm to 100 µm can be used. Note that, in case high water resistance is required for the resin composition, preferably the average particle diameter is submicron range or more, that is 100 nm to 100 µm. Further, the embodiment of using by mixing the aluminum nitride particles with different average particle diameters is preferable. For example, by setting the particle having the average particle diameter of 10 to 100 µm to 30 to 80 wt% of total powder, and the particle of 1 to 10 µm to 10 to 60 wt%, and the particle of 100 nm to 1 µm to 3 to 30 wt% or so, then carrying out the mixing, in this way the viscosity of the resin composition can be low, thereby the filler content of the aluminum nitride particles to the resin composition can be increased.

In case particularly high water resistance is required for the highly thermally conductive resin article which is the cured article of the resin composition of the present invention, the aluminum nitride particles can undergo water resistant treatment prior to the mixing with the resin, thereby it is preferable to use the water resistant aluminum nitride particles as well. As for the treatment agent used for such water resistant treatment (hereinafter, it may be referred as the water resistant treatment agent), phosphoric acid, metal phosphate such as aluminum phosphate or so, acidic phosphate, phosphonic acid compound, silane coupling agent, organic acid or so may be mentioned; however among these, phosphoric acid, metal phosphate such as aluminum phosphate or so, acidic phosphate, or the combination thereof is preferable. The above mentioned phosphoric acid compounds are not particularly limited, and those already known can be used. For example, orthophosphoric acid, pyrophosphoric acid, metaphosphoric acid or so may be mentioned. Also, as the example of metal phosphate, acidic aqueous solution such as lithium phosphate, potassium phosphate, sodium phosphate, manganese phosphate, calcium phosphate, strontium phosphate, barium phosphate, aluminum phosphate, gallium phosphate, lanthanum phosphate or so may be mentioned. Of course, phosphoric acid or those dissolving the metal salts in the aqueous solution thereof may be used suitably, as examples of metal salts, hydrochloric acid salts, nitric acid salts, sulfuric acid salts, formic acid salts, acetic acid slats, propionic acid salts or so of lithium, potassium, sodium, magnesium, calcium, strontium, barium, aluminum, gallium, lanthanum or so may be mentioned. The acidic phosphate used as the treatment agent of the water resistant nitride aluminum, it is not particularly limited, and the acidic alkyl phosphate comprising alkyl group having the carbon atoms of 20 or less is preferable. The carbon atoms in this case is not the total carbon atoms of the acidic alkyl phosphate, but it refers to the carbon atoms of alcohol which is the source material of the ester synthesis. As the preferable example of the acidic phosphate, methyl phosphate, ethyl phosphate, propyl phosphate, butyl phosphate, pentyl phosphate, hexyl phosphate, octyl phosphate, decyl phosphate, lauryl phosphate, stearyl phosphate or so may be mentioned. These acidic phosphates may usually be the mixture of monoester and diester, and particularly those of monoester rich or diester rich can be used as well. Among the above mentioned acidic phosphate, those having carbon atoms of 2 to 18 are suitably used, and as the examples of these, ethyl phosphate, propyl phosphate, pentyl phosphate, hexyl phosphate, octyl phosphate, decyl phosphate, lauryl phosphate, stearyl phosphate or so may be mentioned. Also, as the phosphonic acid compound, those with carbon atoms of 2 to 18 are suitably used, and for example, methyl phosphonate, ethyl phosphonate, propyl phosphonate, butyl phosphonate, pentyl phosphonate, hexyl phosphonate, octyl phosphonate, decyl phosphonate, lauryl phosphonate, stearyl phosphonate, vinyl phosphonate, phenyl phosphonate or so may be mentioned. When the above mentioned acidic phosphate and phosphonic acid compound are compared, the acidic phosphate is preferably used in order to obtain good water resistance.

The production method of the above mentioned water resistant treated aluminum nitride particles are not particularly limited, and known methods can be employed. For example, the aluminum nitride and the water resistant treatment agent are mixed by wet method or dry method, then the strong coating layer can be formed by heat treatment after the coating. Note that, in order to satisfy both the thermal conductivity and the water resistance, it is desirable to form uniform and thin coating layer, and it is preferable to carry out the treatment of the aluminum nitride by dispersing in the solvent. As the example of the device suitably used for this dispersing and mixing step, a disperser, a homogenizer, an ultrasonic disperser, a wet method ball mill, a wet method vibration ball mill, a wet method beads mill, a collision disperser such as nanomizer or high pressure disperser or so may be mentioned. After the dispersing and mixing step, a known device can be employed for the drying to remove the solvent, and for example, an oven, a spray drier, a medium fluid drier, and further a rocking mixer equipped with the drying system, and a plowshare mixer or so may be mentioned. At the same time of this drying, or after the drying, the heat treatment is carried out which is to form the strong coating layer of the water resistant treatment agent on the powder surface. The preferable temperature of the heat treatment is 80 to 250°C.

In case of using phosphoric acid, metal phosphate, acidic phosphate or phosphonic acid compound as the water resistant treatment agent, the amount of the phosphoric acid, metal phosphate or organic phosphoric acid present on the surface of the aluminum nitride after the above mentioned water resistant treatment is 0.5 to 10.0 mg/m², more preferably 0.8 to 6.0 mg/m², and particularly preferably 1.0 to 4.0 mg/m² in terms of the equivalence of orthophosphoric acid.

Depending on the needs, ceramic particles other than aluminum nitride particles can be added to the resin composition of the present invention. As for the examples of such particles, particles such as alumina, magnesia, zinc oxide, silica, silicon nitride, boron nitride, silicon carbide or so may be mentioned. The range of the average particle diameter of above mentioned various powders is in accordance with the case of aluminum nitride particle; and in case the above mentioned various particles including the aluminum nitride particles comprises different range of the average particle diameter, then the mixing ratio thereof is also the same as the case of the aluminum nitride particle.

Note that, in order to obtain the resin composition having high thermal conductivity, the added amount of the particles of alumina, magnesia, zinc oxide preferably satisfies 2 times or less of the total specific surface area of particles, or more preferably 1 times or less, with respect to total specific surface area 1 of the added aluminum nitride particles. Also, in case of the silica particle having low thermal conductivity, preferably the ratio of the same is 1 times or less, and more preferably 1/2 times or less. Also, for the particles of silicon nitride, boron nitride, silicon carbide which have high thermal conductivity, it is 4 times or less, and more preferably 3 times or less. In case of the boron nitride particle, the thermal conductivity may increase along with the added amount, however in order to increase the viscosity of the composition, it is preferably 4 times or less.

The heat-curable resin used in the present invention refers to the resin which forms three dimensional network structure by crosslinking of the low molecular weight monomers or so. As such heat-curable resin, it is not particularly limited, and those already known can be used. As the examples of these, silicone resin, heat-curable imide resin, acrylic resin, cyanate resin, urethane resin, phenol resin, melamine resin, bismaleimide resins such as aromatic bismaleimide and bismaleimidetriazine resin, heat-curable polyamideimide, urea resin, unsaturated polyester resin, benzoguanamine resin, alkyd resin, diallylphthalate resin or so may be mentioned. However, among these, acrylic resin, silicone resin, heat-curable imide resin and ureide resin are preferable, as these are easy to handle, and from the point of characteristics as the heat-dissipating material. Among these, silicone resin is most preferable as for the use of heat-dissipation, and as most widely used.

The above mentioned heat-curable resin usually needs curing agent for the crosslinking. As such curing agent, it is not particularly limited, and it may be those which can be the initiator of the crosslinking by being activated by heat, activation energy ray, a curing catalyst or so.

The silicone resin used in the present invention is not particularly limited, and it is the silicone resin generally used which is known as a millable type silicone (silicone rubber having high viscosity: so called silicone rubber) or "a" liquid silicone. The general formula of the average composition thereof is polyorganosiloxane shown by

R₅ₐSiO_{(4-a)/2}

(here, R₅ is saturated or unsaturated hydrocarbon group including both of non-substitution or substitution of same type or different type, a is a number of 1.9 to 2.7).

As the examples of R₅, alkyl groups of methyl, ethyl, propryl, butyl or so: cycloalkyl group of cyclohexyl or so: alkenyl group of vinyl, allyl or so: aryl groups of phenyl, naphthyl or so: monovalent hydrocarobn groups of halogen substitution such as chloromethyl or trifluoropropyl wherein the hydrogen atoms bonded to the carbon atoms of said groups being partially or totally substituted by halogen atom, or so may be mentioned. Usually, "a" is 1.9 to 2.7.

The silicone resin may be so called a modified silicone resin, wherein a part of hydrocarbon group R₅ among the plurality of hydrocarbon groups R₅ is substituted with polyether, vinyl group, amino group, carbinol group, epoxy group, acrylic group, methacrylic group, carboxyl group, phenol group, alkoxy group, silanol group, hydrogen or so.

In case of using the resin composition of the present invention as the heat-dissipating sheet, the heat-dissipating adhesive agent, the sealing material or so, the curing agent is added. Such curing agent is not particularly limited, and those already known can be used. In general, the reaction system of the curing agent of the silicone resin is largely separated into three types, which are the condensation reaction, the crosslinking reaction by the organic peroxides, and the addition reaction.

The condensation reaction is the reaction which entails the dehydration condensation of the modified silicone resin comprising the silanol group, and in order to promote this reaction, the curing agent of the metal compounds, the alkoxy group containing compounds, acetoxy group containing silane, ketone oxime group containing silane, aminoxy group containing siloxane or so can be used. As the example of the metal compounds, metal carboxylates such as iron octoate, cobalt octoate, manganese octoate, tin naphthenate, tin caprylate, tin oleate or so; organic tin compounds such as dimethyl tin dioleate, dimethyl tin dilaurylate, dibutyl tin dioleate, diphenyl tin diacetate, dibutyl tin oxide, dibutyl tin dimethoxide, dibutylbis(triethoxysiloxy) tin, dioctyltin dilaurate or so; as alkoxy group containing compound, ethyl silicate, propyl silicate, methyltrimethoxy silane, vinyl trimethoxy silane, methyltriethoxy silane, vinyl triethoxysilane, methyl tris(methoxyethoxy) silane, vinyl tris(methoxyethoxy) silane, methyl tripropenoxy silane or so, and the partial hydrolysis thereof may be mentioned. Also, as the acetoxy group containing silane, methyl triacetoxy silane, vinyl triacetoxy silane or so; as the ketone oxime group containing silane, methyl tri(acetoneoxime) silane, vinyl tri(acetoneoxime) silane, methyl tri(methylethylketoxime) silane, vinyl tri(methylethylketoxime) silane or so and the partial hydrolysis thereof may be mentioned. Further, as aminoxy group containing siloxane, cyclic siloxane such as hexamethyl-bis(diethylaminoxy) cyclotetrasiloxane, tetramethyl dibutyl-bis(diethylaminoxy) cyclotetrasiloxane, heptamethyl(diethylaminoxy) cyclotetrasiloxane, pentamethyl-tris(diethylaminoxy) cyclotetrasiloxane, hexamethyl-bis(methylethylaminoxy)cyclotetrasiloxane, tetramethyl-bis(diethylaminoxy)-mono(methylethylaminoxy)cyclotetrasiloxane or so may be mentioned. Further, in case of using the above mentioned curing agent, it is not necessary limited to one type, but two or more types can be used together as well.

The crosslinking reaction caused by the organic peroxides is the method of crosslinking the silicone resin comprising the unsaturated hydrocarbon group such as vinyl groups using the organic peroxides as the radical curing agent. As such organic peroxides, benzoyl peroxide, 2,4-dichlorobenzoyl peroxide, dicumyl peroxide, cumyl-t-butyl peroxide, 2,5-dimethyl-2,5-di-t-butyl peroxy hexane, di-t-butyl peroxide or so may be mentioned. These organic peroxides may be used alone or by combining two or more thereof.

The addition reaction is the reaction which add the hydrosilane compound to the silicone resin including the vinyl group, and it generally uses the reaction catalyst of platinum compound. As such platinum compound, the platinum based catalyst such as chloroplatinic acid, platinum olefin complex, platinum vinylsiloxane complex, platinum black, platinum triphenylphosphine complex or so may be mentioned. As the hydrosilane compound, it is not particularly limited, for example, halogenated hydrosilanes such as trichlorosilane, methyl dichlorosilane, dimethyl chlorosilane, phenyl dichlorosilane; alkoxy silanes such as trimethoxy silane, triethoxy silane, methyl diethoxy silane, methyl dimethoxy silane, phenyl dimethoxy silane, 1-[2-(trimethoxysilyl)ethyl]-1,1,3,3-tetramethyl disiloxane or so; acyloxyhydrosilanes such as methyl diacetoxy silane, phenyldiacetoxy silane or so; ketoxymate hydrosilanes such as bis(dimethylketoxymate)methyl silane, bis(cyclohexylketoxymate)methyl silane or so may be mentioned.

Further, recently, the silicone resin which starts the curing by the active energy ray irradiation such as the ultraviolet ray has been developed. The photoactive energy ray curing silicone resin as such is largely separated into cation type and anion type. These photoactive energy ray curing silicone resins includes the heat-curable resin in the present invention, as long as it has heat-curable property.

For the cation type, modified silicone comprising the epoxy group and alkoxy group or so is cured by using the cation polymerization initiator which generates cation or Louis acid by the active energy ray as the curing agent. Such polymerization initiator can be used without any particular limitation as long as it generates cation species or Lewis acid, however for example metal fluoroboron complex salt and trifluoroboron comlex compounds, bis(perfuluoroalkylsulfonyl) methane metal salt, aryldiazonium compound, aromatic onium salt of Via group element, aromatic onium salt of Va group element, dicarbonylchelate of IIIa to Va group element, thiopyrylium salt, Via element in the form of MF₆-anion (here, M is selected from the group consisting of phosphorous, antimony and arsenic), arylsulfonium complex salt, aromatic iodinium complex salt and aromatic sulfonium complex salt, bis[4-(diphenylsulfonio)phenyl]sulfide-bishexafluoro metal salt (for example, phosphorate, arsenate, antimonate or so); aromatic iodinium complex salt and aromatic sulfonic complex salt wherein the anion is B(C₆F₅)₄ or so may be mentioned.

On the other hand, in the radial type, the silicone resin comprising the vinyl group is cured by using the radial initiator as the curing agent which generates the radial by active energy ray. As such radial initiator, acetophenone based compound, benzophenone based compound, acylphosphine oxide based compound, oxime ester based compound, benzoine based compound, biimidazole based compound, α-diketone based compound, titanocene based compound, polynuclear quinone based compound, xanthone based compound, thioxanthone based compound, triazine based compound, ketal based compound, azo based compound, peroxides, 2,3-dialkyldione based compound, disulfide based compound, thiuram compounds, fluoroamine based compound or so may be mentioned.

The acrylic resin used in the present invention is not particularly limited, and it is acrylic resin which is generally used. As for example, cyano group containing vinyl compounds such as acrylonitrile and methacrylonitrile or so, (meth)acrylicamide compounds and (meth)acrylates or so may be mentioned. As for said (meth)acrylicamide compound, acrylic amide, methacrylic amide, N,N-dimethylacrylic amide or so may be mentioned, and these may be used alone or by combining two or more thereof. As said (meth)acrylates, monofunctional (meth)acrylate such as methyl (meth)acrylate, ethyl (meth)acrylate, butyl (meth)acrylate, 2-ethylhexyl (meth)acrylate, hydroxyethyl (meth)acrylate, phenyl (meth)acrylate, benzyl (meth)acrylate, phenoxyethyl (meth)acrylate, cyclohexyl (meth)acrylate, isobornyl (meth)acrylate, tricyclodecanyl (meth)acrylate or so may be mentioned, and these may be used alone or by mixing. Also, as polyfunctional (meth)acrylate, bifunctional (meth)acrylate such as ethyleneglycol di(meth)acrylate, diethyleneglycol di(meth)acrylate, propyleneglycol di(meth)acrylate, triethyleneglycol di(meth)acrylate, tetraethyleneglycol di(meth)acrylate, polyethyleneglycol di(meth)acrylate, 1,3-butanediol di(meth)acrylate, 1,4-butanediol di(meth)acrylate, neopentylglycol di(meth)acrylate, 1,6-hexanediol di(meth)acrylate, 1,9-nonanediol di(meth)acrylate, 1,10-decanediol di(meth)acrylate, glycerol di(meth)acrylate, di(meth)acrylate of ethyleneoxide additive or propyleneoxide additive of bisphenol A, bisphenol A-diepoxy-acrylic acid additive or so, and trifunctional (meth)acrylate such as trimethylolpropane tri(meth)acrylate, pentaerythritol tri(meth)acrylate, glycerine tri(meth)acrylate or so may be mentioned.

As the curing agent of these acrylic resins, a heat-radial curing agent can be used as well. It is not particularly limited, as long as it is the heat-radial curing agent usually used, however the decomposition temperature of 40 to 140°C is preferable. If the decomposition temperature is less than 40°C, the storage property of the resin composition at the normal temperature deteriorates, and if it exceeds 140°C, the curing time becomes extremely long hence it is not preferable. As specific example of the heat-radical curing agent which satisfies this, methylethylketone peroxide, methylcyclohexanone peroxide, methylacetoacetate peroxide, acetylacetone peroxide, 1,1-bis(t-butyl peroxy)3,3,5-trimethylcyclohexane, 1,1-bis(t-hexylperoxy) cyclohexane, 1,1-bis(t-hexylperoxy)3,3,5-trimethylcyclohexane, 1,1-bis(t-butylperoxy)cyclohexane, 2,2-bis(4,4-di-t-butylperoxycyclohexyl)propane, 1,1-bis(t-butylperoxy)cyclododecane, n-butyl4,4-bis(t-butylperoxy)valerate, 2,2-bis(t-butylperoxy)butane, 1,1-bis(t-butylperoxy)-2-methylcyclohexane, t-butylhydroperoxide, P-menthanehydroperoxide, 1,1,3,3-tetramethylbutylhydroperoxide, t-hexylhydroperoxide, dicumylperoxide, 2,5-dimethyl-2,5-bis(t-butylperoxy)hexane, α,α'-bis(t-butylperoxy)diisopropylbezene, t-butylcumylperoxide, di-t-butylperoxide, 2,5-dimethyl-2,5-bis(t-butylperoxy)hexyn-3, isobutyrylperoxide, 3,5,5-trimethylhexanoylperoxide, octanoylperoxide, lauroylperoxide, cinnamic acid peroxide, m-toluoylperoxide, benzoylperoxide, diisopropyl peroxydicarbonate, bis(4-t-butylcyclohexyl) peroxydicarbonate, di-3-methoxybutyl peroxydicarbonate, di-2-ethylhexyl peroxydicarbonate, di-sec-butyl peroxydicarbonate, di(3-methyl-3-methoxybutyl) peroxydicarbonate, di(4-t-butylcyclohexyl) peroxydicarbonate, α,α'-bis(neodecanoylperoxy)diisopropylbenzene, cumyl peroxyneodecanoate, 1,1,3,3,-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypivalate, t-butyl peroxypivalate, 2,5-dimethyl-2,5-bis(2-ethylhexanoylperoxy)hexane, 1,1,3,3-tetramethylbutylperoxy-2-ethylhexanoate, 1-cyclohexyl-1-methylethylperoxy-2-ethylhexanoate, t-hexylperoxy-2-ethylhexanoate, t-butylperoxy-2-ethylhexanoate, t-butylperoxyisobutylate, t-butylperoxymaleic acid, t-butylperoxylaurate, t-butylperoxy-3,5,5-trimethylhexanoate, t-butylperoxyisopropylmonocarboante, t-butylperoxy-2-ethylhexylmonocarbonate, 2,5-dimethyl-2,5-bis(benzoylperoxy)hexane, t-butylperoxyacetate, t-hexylperoxybenzoate, t-butylperoxy-m-toluoylbenzoate, t-butylperoxybenzoate, bis(t-butylperoxy)isophthalate, t-butylperoxyallylmonocarbonate, 3,3'-4,4'-tetra(t-butylperoxycarbonyl)benzophenone or so may be mentioned; and these may be used alone, or two or more can be mixed for use in order to control the curability.

The heat-curable imide resin used in the present invention is not particularly limited, and it is the heat-curable imide resin generally used. As the preferable[space] example of heat-curable imide resin used in the present invention, a thermally fusible aromatic polyimides may be mentioned. As tetracarboxylic acid dianhydrides (acid, acid dianhydrides, acid ester) which can be used for the thermally fusible aromatic polyimide, 3,3',4,4'-biphenyltetracarboxylic acid dianhydride and 2,3,3',4'-biphenyltetracarboxylic acid dianhydride are most preferable, but 2,2-bis(3,4-dicarboxyphenyl)propane dianhydride, bis(3,4-dicarboxyphenyl)ether dianhydride, and acid and acid ester thereof may be also mentioned. A part of these acids can be substituted by pyromellitic acid dianhydride, 3,3',4,4'-benzophenonetetracarboxylic acid dianhydride or so. As aromatic diamine which can be used for said polyimide preferably used in the present invention, the aromatic diamine wherein plurality of benzene rings and the group of -O-, -CH₂-, -C(CH₃)₂-, -O(Bz)O-(Bz:benzene), -(Bz)O(Bz)- or so are comprised in the molecular chain and having diamine at meta position in flexible structure such as, 1,3-bis(3-aminophenoxy)benzene, 1,3-bis(4-aminophenoxy)benzene, 3,3'-diaminodiphenylether, 3,3'-diaminobenzophenone, 2,2-bis(3-aminophenyl)propane, 1,4-bis(3-aminophenoxy)benzene, 4,4'-bis(3-aminophenyl)diphenylether, 4,4'-bis(3-aminophenyl)diphenylmethane, 4,4'-bis(3-aminophenoxy)diphenylether, 4,4'-bis(3-aminophenoxy)diphenylmethane, 2,2-bis[3-(aminophenoxy)phenyl]propane or so are suitably used. Said polyimide which is preferably used in the present invention is preferably those which becomes a solution (as long as an uniform solution condition is maintained, a part of it may be formed into imide) of polyamic acid by reacting in the organic solvent such as N-methyl-2-pyrrolidone or so, under the condition of excessive tetracarboxylic acid dianhydride or under the condition of sealing the diamine terminal with dicarboxylic acid anhydride or so. As the example of dicarboxylic acid anhydride for sealing the amine terminal, phthalic anhydride and the substitution thereof, hexahydrophthalic anhydride and the substitution thereof, succinic acid anhydride and the substitution thereof may be mentioned.

The urethane resin used in the present invention is not particularly limited, and it is urethane resin which is generally used, and as the preferable example, the urethane resin obtained by reacting polyol and polyisocyanate may be mentioned. As such polyol, polyol comprising two or more hydroxyl group in one molecule can be used, and ethylene glycol, propylene glycol, diethylene glycol, dipropylene glycol, butane diol, hexane diol, glyceriene, trimethylol propane or so may be mentioned. Further, polyoxypolyalkylenepolyol such as propyleneoxide additives or so of glycerine, polytetramethylenepolyoxyglycol, castor oil based polyol, ε-caprolactone based polyol, β-methyl-δ-valerolactone based polyol, carbonate based polyol or so may be used, and these may be used by combining two or more thereof.

As the example of polyisocyante reacted with said polyol, diphenylmethane diisocyanate such as 4,4'-diphenymethane diisocyanate or so, aromatic polyisocyanate such as polymethylenepolyphenylene polyisocyante, polytolylene polyisocyanate, tolylene diisocyanate, xylylene diisocyanate, naphthalene diisocyanate or so, aliphatic polyisocyanate such as hexamethylene diisocyanate or so, alicyclic polyisocyanate such as isophorone diisocyanate or so, further carbodiimide modified polyisocyanate of above polyisocyanate, isocyanurate modified polyisocyanate or so may be mentioned. Also, the reaction product obtained by reacting the polyol with excessive polyisocyanate which is also called urethane prepolymer comprising isocyanate group at the molecular terminal can be used, and further the mixed product thereof can be used. Further, when carrying out the reaction to form urethane from polyol and organic polyisocyanate, urethane curing agent can be used appropriately. As this urethane curing agent, known curing agent such as tertiary amine compound or metalorganic compound or so can be used. As such curing agent, for example, triethylene diamine, N,N'-dimethylhexamethylene diamine, N,N'-dimethylbutane diamine, DBU salt such as diazabicyclo(5,4,0)-7-undencene(DBU) and DBU octylate or so, lead octylate, dibutyltin laurate, dibutyltin dilaurate, bismustris(2-ethylhexanoate), diisopropoxybis(ethylacetoacetate) titanium or so may be mentioned.

The added amount of the above mentioned curing agent is not particularly limited, and it is preferably determined within the rage of 0.1 to 5 parts by weight, and more preferably 0.2 to 4 parts by weight with respect to 100 parts by weight of the heat-curable resin.

As the thermoplastic resin used in the present invention, polyarylenesulfide may be mentioned, and particularly polyphenylenesulfide wherien the arylene group is phenylene group is preferable from the point of melt viscosity and strength or so. This polyphenylene sulfide may be homopolymer made of the same repeating unit, or copolymer made of two or more different phenylene groups, or it may also be a mixture thereof. It is preferable to have appropriate viscosity during melting from the point of the shaping property, the melting viscosity is suitably within the range of 10 to 20000 poise, particularly suitably 100 to 5000 poise when it is measured under the condition of the temperature of 310°C and the shear speed of 1200/sec.

The acidic phosphate used for the resin composition of the present invention has the structure shown in the below structure (1). 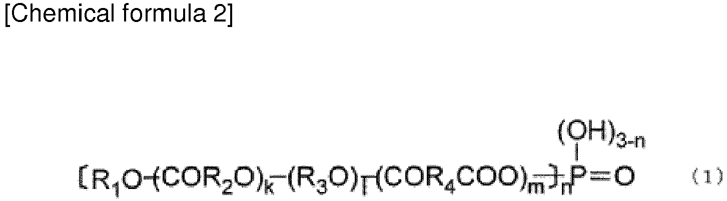 (in the above formula,
R₁: Saturated or unsaturated hydrocarbon group having carbon atoms of 4 to 20
R₂: Saturated hydrocarbon group having carbon atoms of 1 to 20
R₃: Saturated hydrocarbon group having carbon atoms of 2 or 3
R₄: Saturated or unsaturated hydrocarbon group having carbon atoms of 1 to 8
k: Integer of 0 to 20
I: Integer of 0 to 20
m: Integer of 0 to 20
n: 1 or 2, wherein
in case R₁, R₂, R₃ and R₄ are respectively present in plurality, then plurality of R₁, R₂, R₃ and R₄ may be the same or different groups respectively)

R₁ in the above formula is not particularly limited as long as it is saturated or unsaturated hydrocarbon group having the carbon atoms of 4 to 20. As the specific example of R₁, saturated hydrocabon groups such as octyl group, 2-ethylhexyl group, nonyl group, decyl group, undecyl group, dodecyl group, tetradecyl group, hexadecyl group, octadecyl group or so; unsaturated hydrocarbon groups such as phenyl group, nonylphenyl group or so may be mentioned. The carbon atoms are preferably 6 to 18, and particularly in case k, I and m are 0, the carbon atoms are preferably 10 to 18.

R₂ in the above formula is the saturated hydrocarbon group having the carbon atoms of 1 to 20, and the carbon atoms are preferably 1 to 16. As the specific example of R₂, methylene group, ethylene group, petylene group, tetradecylene group, pentyldecylene group or so may be mentioned.

R₃ in the above formula is saturated hydrocarbon having the carbon atoms of 2 or 3, and the carbon atoms are preferably 2, and more preferably it is ethylene group.

The effect of the ether group including R₃ is not theoretically bound, however in general, such ether chain is flexible and easily bent, and it contributes to the affinity with the resin; and further since the ether group is hydrophilic, it affects the hydrophilic-hydrophobic balance in combination with the alkyl chain, thereby it is speculated to contribute to the affinity between the resin. R₄ of the above formula is the saturated or unsaturated hydrocarbon groups having the carbon atoms of 1 to 8, however the carbon atoms is preferably 1 to 6. As specific example of R₄, saturated hydrocarbon of methylene group, ethylene group, propylene group, butylene group and pentylene group or so; unsaturated hydrocarbon group of phenyl group or so may be mentioned.

In the above formula, k is not particularly limited as long as it is integer of 0 to 20, however it is preferably 0 to 10.

In the above formula, I is not particularly limited as long as it is integer of 0 to 20, however it is preferably 0 to 10.

In the above formula, m is not particularly limited as long as it is integer of 0 to 20, however it is preferably 0 to 10.

The monomer unit expressed by using above mentioned k, I, m does not necessarily have to be placed in the order shown in the formula (1), and also it may be any of block copolymer and random copolymer.

In the above formula, n is 1 or 2, and the acidic phosphate expressed by the general formula (1) used in the resin composition of the present invention needs at least one acidic hydroxyl group. The reason for this is not theoretically bound, however the aluminum nitride is the solid base, thus it is speculated that the acidic group is necessary to be adsorbed to the surface thereof.

The acidic phosphate expressed by the general formula (1) may be a mixture of n of 1 and 2. Also, in case the acidic phosphate expressed by the general formula (1) is n=2, it may be those comprising different side chains in same molecule. Further, for the acidic phosphate expressed by the general formula (1), the mixture of molecules having different structure may be used. Note that, the acidic phosphate expressed by the general formula (1) is usually obtained as the mixture of n of 1 and 2.

Even in case of acidic phosphate, if it is not those shown by the general formula (1), then the affinity between the aluminum nitride and the heat-curable resin or the thermoplastic resin is not sufficient, and the viscosity rises, thus it may cause problem such as the decline of the thermal conductivity or so.

The molecular weight of the acidic phosphate expressed by the general formula (1) is not particularly limited, however it is preferably 5000 or less, more preferably 2000 or less, and most preferably 1500 or less. This is because when the side chain of the acidic phosphate adsorbing to the aluminum nitride surface is somewhat shorter, the thermal resistance at the interface of the aluminum nitride particle and the heat-curable resin or the thermosetting resin could be lower.

Among the above mentioned acidic phosphate, as the example which is commercially available, DYSPERBYK-111 (made by BYK-chemie Japan), and BYK-W9010 (made by BYK-chemie Japan) or so may be mentioned.

The acidic phosphate expressed by the general formula (1) preferably comprises the structural formula which is expressed by the following general formula (2) wherein k and m is 0, in order to achieve higher thermal conductivity of the cured resin composition. 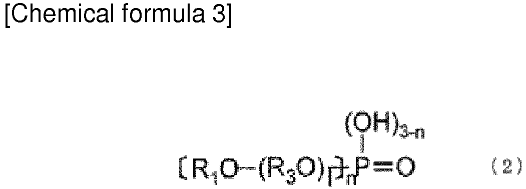 (in the above formula,
R₁: Saturated or unsaturated hydrocarbon group having carbon atoms of 4 to 20
R₃: Saturated hydrocarbon group having carbon atoms of 2 or 3
I: Integer of 0 to 20
n: 1 or 2, wherein
in case R₁ and R₃ are respectively present in plurality, then plurality of R₁ and R₃ may be the same or different groups respectively)

R₁ in the above formula is not particularly limited as long as it is saturated or unsaturated hydrocarbon group having the carbon atoms of 4 to 20. As R₁, as the saturated hydrocarbon group such as alkyl group of butyl group, pentyl group, hexyl group, heptyl group, octyl group, 2-ethylhexyl group, nonyl group, decyl group, undecyl group, dodecyl group, hexadecyl group, octadecyl group or so; unsaturated hydrocarbon group of phenyl group, nonylphenyl group, oleyl group or so may be mentioned. The carbon atoms are preferably 6 to 18, and particularly in case I is 0, it is preferably 10 to 18. As the preferable group, decyl group, undecyl group and dodecyl group or so may be mentioned.

R₃ in the above formula is saturated hydrocarbon having the carbon atoms of 2 or 3, and the carbon atoms are preferably 2, and more preferably it is ethylene group.

The effect of the ether group including R₃ is not theoretically bound, however in general, such ether chain is flexible and easily bent, and it contributes to the affinity with the resin; and further since the ether group is hydrophilic, it regulate the hydrophilic-hydrophobic balance by the combined effect with the alkyl chain, thereby it is speculated to contribute to the affinity between the resin.

In the above formula, I is not particularly limited as long as it is integer of 0 to 20, however it is preferably 0 to 10.

In the above formula, n is 1 or 2.

The acidic phosphate expressed by the general formula (2) may be a mixture of n being 1 and n being 2. Also, in case the acidic phosphate expressed by the general formula (2) is n = 2, it may be those comprising different side chains in same molecule. Further, for the acidic phosphate expressed by the general formula (2), the mixture of molecules having different structure may be used. Note that, the acidic phosphate expressed by the general formula (1) is usually obtained as the mixture of n of 1 and 2.

As specific example of such acidic phosphate,
the mixture of compounds of n being 1 and 2 wherein R₁ is octyl group and I is 0,
the mixture of compounds of n being 1 and 2 wherein R₁ is octyl group, I is 1 and R₃ is ethylene group,
the mixture of compounds of n being 1 and 2 wherein R₁ is octyl group, I is 2 and R₃ is ethylene group,
the mixture of compounds of n being 1 and 2 wherein R₁ is decyl group and I is 0,
the mixture of compounds of n being 1 and 2 wherein R₁ is decyl group, I is 1 and R₃ is ethylene group,
the mixture of compounds of n being 1 and 2 wherein R₁ is decyl group, I is 2 and R₃ is ethylene group,
the mixture of compounds of n being 1 and 2 wherein R₁ is decyl group, I is 3 and R₃ is ethylene group,
the mixture made of the compound of R₁ being octyl group, I being 0 and n being 1, the compound of R₁ being octyl group, I being 0 and n being 2, the compound of R₁ being decyl group, I being 0 and n being 1, the compound of R₁ being decyl group, I being 0 and n being 2, and the compound of R₁ being octyl group and decyl group, I is 0 and n is 2,
the mixture of compounds of n being 1 and 2 wherein R₁ is undecyl group and I is 0,
the mixture of compounds of n being 1 and 2 wherein R₁ is undecyl group, I is 1 and R₃ is ethylene group,
the mixture of compounds of n being 1 and 2 wherein R₁ is undecyl group, I is 2 and R₃ is ethylene group,
the mixture of compounds of n being 1 and 2 wherein R₁ is undecyl group, I is 3 and R₃ is ethylene group,
the mixture of compounds of n being 1 and 2 wherein R₁ is undecyl group, I is 4 and R₃ is ethylene group,
the mixture of compounds of n being 1 and 2 wherein R₁ is undecyl group, I is 5 and R₃ is ethylene group,
the mixture of compounds of n being 1 and 2 wherein R₁ is undecyl group, I is 6 and R₃ is ethylene group,
the mixture of compounds of n being 1 and 2 wherein R₁ is undecyl group, I is 7 and R₃ is ethylene group,
the mixture of compounds of n being 1 and 2 wherein R₁ is undecyl group, I is 8 and R₃ is ethylene group,
the mixture of compounds of n being 1 and 2 wherein R₁ is undecyl group, I is 9 and R₃ is ethylene group,
the mixture of compounds of n being 1 and 2 wherein R₁ is undecyl group, I is 10 and R₃ is ethylene group,
the mixture of compounds of n being 1 and 2 wherein R₁ is dodecyl group and I is 0,
the mixture of compounds of n being 1 and 2 wherein R₁ is dodecyl group, I is 1 and R₃ is ethylene group,
the mixture of compounds of n being 1 and 2 wherein R₁ is dodecyl group, I is 2 and R₃ is ethylene group,
the mixture of compounds of n being 1 and 2 wherein R₁ is dodecyl group, I is 3 and R₃ is ethylene group,
the mixture of compounds of n being 1 and 2 wherein R₁ is dodecyl group, I is 4 and R₃ is ethylene group,
the mixture of compounds of n being 1 and 2 wherein R₁ is dodecyl group, I is 5 and R₃ is ethylene group,
the mixture of compounds of n being 1 and 2 wherein R₁ is dodecyl group, I is 6 and R₃ is ethylene group,
the mixture of compounds of n being 1 and 2 wherein R₁ is dodecyl group, I is 7 and R₃ is ethylene group,
the mixture of compounds of n being 1 and 2 wherein R₁ is dodecyl group, I is 8 and R₃ is ethylene group,
the mixture of compounds of n being 1 and 2 wherein R₁ is dodecyl group, I is 9 and R₃ is ethylene group,
the mixture of compounds of n being 1 and 2 wherein R₁ is dodecyl group, I is 10 and R₃ is ethylene group,
the mixture of compounds of n being 1 and 2 wherein R₁ is octyldecyl group and I is 0,
the mixture of compounds of n being 1 and 2 wherein R₁ is octyldecyl group, I is 1 and R₃ is ethylene group,
the mixture of compounds of n being 1 and 2 wherein R₁ is octyldecyl group, I is 2 and R₃ is ethylene group,
the mixture of compounds of n being 1 and 2 wherein R₁ is octyldecyl group, I is 3 and R₃ is ethylene group,
the mixture of compounds of n being 1 and 2 wherein R₁ is octyldecyl group, I is 4 and R₃ is ethylene group,
the mixture of compounds of n being 1 and 2 wherein R₁ is octyldecyl group, I is 5 and R₃ is ethylene group,
the mixture of compounds of n being 1 and 2 wherein R₁ is octyldecyl group, I is 6 and R₃ is ethylene group,
the mixture of compounds of n being 1 and 2 wherein R₁ is octyldecyl group, I is 7 and R₃ is ethylene group,
the mixture of compounds of n being 1 and 2 wherein R₁ is octyldecyl group, I is 8 and R₃ is ethylene group,
the mixture of compounds of n being 1 and 2 wherein R₁ is octyldecyl group, I is 9 and R₃ is ethylene group,
the mixture of compounds of n being 1 and 2 wherein R₁ is octyldecyl group, I is 10 and R₃ is ethylene group,
the mixture made of the compound of R₁ being hexyl group, I being 0 and n being 1, the compound of R₁ being hexyl group, I being 0 and n being 2, the compound of R₁ being heptyl group, I being 0 and n being 1, the compound of R₁ being heptyl group, I being 0 and n being 2, the compound of R₁ being octyl group, I being 0 and n being 1, the compound of R₁ being octyl group, I being 0 and n being 2, the compound of R₁ being nonyl group, I being 0 and n being 1, the compound of R₁ being nonyl group, I being 0 and n being 2, the compound of R₁ being decyl group, I being 0 and n being 1 and the compound of R₁ being decyl group, I being 0 and n being 2, furthermore the mixture includes the compound wherein R₁ is not the same when n is 2,
the mixture made of the compound of R₁ being hexyl group, I being 1, R₃ being ethylene group and n being 1, the compound of R₁ being hexyl group, I being 1, R₃ being ethylene group and n being 2, the compound of R₁ being heptyl group, I being 1, R₃ being ethylene group and n being 1, the compound of R₁ being heptyl group, I being 1, R₃ being ethylene group and n being 2, the compound of R₁ being octyl group, I being 1, R₃ being ethylene group and n being 1, the compound of R₁ being octyl group, I being 1, R₃ being ethylene group and n being 2, the compound of R₁ being nonyl group, I being 1, R₃ being ethylene group and n being 1, the compound of R₁ being nonyl group, I being 1, R₃ being ethylene group and n being 2, the compound of R₁ being decyl group, I being 1, R₃ being ethylene group and n being 1 and the compound of R₁ being decyl group, I being 1, R₃ being ethylene group and n being 2, furthermore the mixture includes the compound wherein R₁ is not the same when n is 2,
the mixture made of the compound of R₁ being hexyl group, I being 2, R₃ being ethylene group and n being 1, the compound of R₁ being hexyl group, I being 2, R₃ being ethylene group and n being 2, the compound of R₁ being heptyl group, I being 2, R₃ being ethylene group and n being 1, the compound of R₁ being heptyl group, I being 2, R₃ being ethylene group and n being 2, the compound of R₁ being octyl group, I being 2, R₃ being ethylene group and n being 1, the compound of R₁ being octyl group, I being 2, R₃ being ethylene group and n being 2, the compound of R₁ being nonyl group, I being 2, R₃ being ethylene group and n being 1, the compound of R₁ being nonyl group, I being 2, R₃ being ethylene group and n being 2, the compound of R₁ being decyl group, I being 2, R₃ being ethylene group and n being 1 and the compound of R₁ being decyl group, I being 2, R₃ being ethylene group and n being 2, furthermore the mixture includes the compound wherein R₁ is not the same when n is 2,
the mixture made of the compound of R₁ being hexyl group, I being 3, R₃ being ethylene group and n being 1, the compound of R₁ being hexyl group, I being 3, R₃ being ethylene group and n being 2, the compound of R₁ being heptyl group, I being 3, R₃ being ethylene group and n being 1, the compound of R₁ being heptyl group, I being 3, R₃ being ethylene group and n being 2, the compound of R₁ being heptyl group, I being 3, R₃ being ethylene group and n being 1, the compound of R₁ being octyl group, I being 3, R₃ being ethylene group and n being 1, the compound of R₁ being octyl group, I being 3, R₃ being ethylene group and n being 2, the compound of R₁ being nonyl group, I being 3, R₃ being ethylene group and n being 1, the compound of R₁ being nonyl group, I being 3, R₃ being ethylene group and n being 2, the compound of R₁ being decyl group, I being 3, R₃ being ethylene group and n being 1, and the compound of R₁ being decyl group, I being 3, R₃ being ethylene group and n being 2, furthermore the mixture includes the compound wherein R₁ is not the same when n is 2,
the mixture made of the compound of R₁ being hexyl group, I being 4, R₃ being ethylene group and n being 1, the compound of R₁ being hexyl group, I being 4, R₃ being ethylene group and n being 2, the compound of R₁ being heptyl group, I being 4, R₃ being ethylene group and n being 1, the compound of R₁ being heptyl group, I being 4, R₃ being ethylene group and n being 2, the compound of R₁ being octyl group, I being 4, R₃ being ethylene group and n being 1, the compound of R₁ being octyl group, I being 4, R₃ being ethylene group and n being 2, the compound of R₁ being nonyl group, I being 4, R₃ being ethylene group and n being 1, the compound of R₁ being nonyl group, I being 4, R₃ being ethylene group and n being 2, the compound of R₁ being decyl group, I being 4, R₃ being ethylene group and n being 1 and the compound of R₁ being decyl group, I being 4, R₃ being ethylene group and n being 2, furthermore the mixture includes the compound wherein R₁ is not the same when n is 2 or so may be mentioned.

As the preferable examples among the aformentioned compounds,
the mixture of compounds of n being 1 and 2 wherein R₁ is decyl group, I is 1 and R₃ is ethylene group,
the mixture of compounds of n being 1 and 2 wherein R₁ is decyl group, I is 2 and R₃ is ethylene group,
the mixture of compounds of n being 1 and 2 wherein R₁ is decyl group, I is 3 and R₃ is ethylene group,
the mixture of compounds of n being 1 and 2 wherein R₁ is undecyl group and I is 0,
the mixture of compounds of n being 1 and 2 wherein R₁ is undecyl group, I is 1 and R₃ is ethylene group,
the mixture of compounds of n being 1 and 2 wherein R₁ is undecyl group, I is 2 and R₃ is ethylene group,
the mixture of compounds of n being 1 and 2 wherein R₁ is undecyl group, I is 3 and R₃ is ethylene group,
the mixture of compounds of n being 1 and 2 wherein R₁ is undecyl group, I is 4 and R₃ is ethylene group,
the mixture of compounds of n being 1 and 2 wherein R₁ is undecyl group, I is 5 and R₃ is ethylene group,
the mixture of compounds of n being 1 and 2 wherein R₁ is undecyl group, I is 6 and R₃ is ethylene group,
the mixture of compounds of n being 1 and 2 wherein R₁ is undecyl group, I is 7 and R₃ is ethylene group,
the mixture of compounds of n being 1 and 2 wherein R₁ is undecyl group, I is 8 and R₃ is ethylene group,
the mixture of compounds of n being 1 and 2 wherein R₁ is undecyl group, I is 9 and R₃ is ethylene group,
the mixture of compounds of n being 1 and 2 wherein R₁ is undecyl group, I is 10 and R₃ is ethylene group,
the mixture of compounds of n being 1 and 2 wherein R₁ is dodecyl group and I is 0,
the mixture of compounds of n being 1 and 2 wherein R₁ is dodecyl group, I is 1 and R₃ is ethylene group,
the mixture of compounds of n being 1 and 2 wherein R₁ is dodecyl group, I is 2 and R₃ is ethylene group,
the mixture of compounds of n being 1 and 2 wherein R₁ is dodecyl group, I is 3 and R₃ is ethylene group,
the mixture of compounds of n being 1 and 2 wherein R₁ is dodecyl group, I is 4 and R₃ is ethylene group,
the mixture of compounds of n being 1 and 2 wherein R₁ is dodecyl group, I is 5 and R₃ is ethylene group,
the mixture of compounds of n being 1 and 2 wherein R₁ is dodecyl group, I is 6 and R₃ is ethylene group,
the mixture of compounds of n being 1 and 2 wherein R₁ is dodecyl group, I is 7 and R₃ is ethylene group,
the mixture of compounds of n being 1 and 2 wherein R₁ is dodecyl group, I is 8 and R₃ is ethylene group,
the mixture of compounds of n being 1 and 2 wherein R₁ is dodecyl group, I is 9 and R₃ is ethylene group,
the mixture of compounds of n being 1 and 2 wherein R₁ is dodecyl group, I is 10 and R₃ is ethylene group or so may be mentioned.

As the examples of commercially available products among the above mentioned acidic phosphate,
the mixture of the compound of n being 1 and 2 wherein R₁ is decyl group, I is 3 and R₃ is ethylene group (Phosphanol RS-410: made by TOHO Chemical Industry Co.,Ltd),
the mixture of the compound of n being 1 and 2 wherein R₁ is undecyl group, I is 6 and R₃ is ethylene group (Phosphanol RS-610: made by TOHO Chemical Industry Co.,Ltd),
the mixture of the compound of n being 1 and 2 wherein R₁ is undecyl group, I is 10 and R₃ is ethylene group (Phosphanol RS-710: made by TOHO Chemical Industry Co.,Ltd),
the mixture of the compound of n being 1 and 2 wherein R₁ is octyldecyl group, I is 2 and R₃ is ethylene group (Phosphanol RL-310: made by TOHO Chemical Industry Co.,Ltd),
the mixture of the compound of R₁ being hexyl group, heptyl group, octyl group, nonyl group and decyl group, and n being 1 and 2 wherein I is 4 and R₃ is ethylene group (Phosphanol RA-600: made by TOHO Chemical Industry Co.,Ltd),
the mixture of the compound of n being 1 and 2 wherein R₁ is dodecyl group and I is 0, and the content of n being 1 is larger than that of n being 2 (Phosphanol ML-200: made by TOHO Chemical Industry Co.,Ltd),
the mixture of the compound of n being 1 and 2 wherein R₁ is dodedecyl group, I is 2 and R₃ is ethylene group (Phosphanol ML-220: made by TOHO Chemical Industry Co.,Ltd),
the mixture of the compound of n being 1 and 2 wherein R₁ is dodedecyl group, I is 4 and R₃ is ethylene group (Phosphanol ML-240: made by TOHO Chemical Industry Co.,Ltd), and
the mixture of the compound of n being 1 and 2 wherein R₁ is dodedecyl group, I is 0 and R₃ is ethylene group, and the content of n being 1 and n being 2 are about the same (Phosphanol GF-199: made by TOHO Chemical Industry Co.,Ltd) or so may be mentioned.

The blending ratio of the aluminum nitride particle to the resin composition of the present invention is not particularly limited. However in order to enhance the thermal conductivity of the highly thermally conductive resin article which is made by curing the resin composition, the preferable amount of the aluminum nitride particles is 50 parts by weight or more, more preferably 100 parts by weight or more, most preferably 200 parts by weight or more with respect to 100 parts by weight of the total amount of the heat-curable resin or the thermoplastic resin, the curing agent and the acidic phosphate expressed by the general formula (1). Also, in view of the viscosity, fluidity, workability of the resin composition, the above mentioned weight ratio of the aluminum nitride is preferably 900 parts by weight or less, and more preferably 700 parts by weight or less. Also, the amount of the particles added to the resin composition of the present invention, including the ceramic particles other than the aluminum nitride particles are preferably 50 to 900 parts by weight and more preferably 100 to 800 parts by weight with respect to 100 parts by weight of the heat-curable resin or the thermoplastic resin. If the amount of the particles are less than the above mentioned range, the thermal conductivity of the resin composition becomes insufficient, and on the other hand if it is larger than the above mentioned range, then viscosity of the resin composition becomes too high, hence the workability during the shaping, and the flexibility after the curing could be compromised.

The added amount of the acidic phosphate expressed by the general formula (1) is appropriately determined in view of the types of the heat-curable resin, the thermoplastic resin, and the curing agent, as well as the specific surface area of the aluminum nitride particles. However, the acidic phosphate expressed by the general formula (1) is preferably 0.4 to 5 parts by weight, and more preferably 0.6 to 4 parts by weight with respect to 100 parts by weight of the heat-curable resin or the thermoplastic resin, in order to keep the innate physical properties of the heat-curable resin or the thermoplastic resin while maintaining sufficient affinity between the aluminum nitride particles and the heat-curable resin or the thermoplastic resin.

The resin composition of the present invention is produced by mixing the aluminum nitride particles, the heat-curable resin or the thermoplastic resin, and the acidic phosphate expressed by the general formula (1). Here, the effect of giving highly thermally conductive property to the resin composition by adding the aluminum nitride particles will be compromised, if the aluminum nitride particles are treated with the acidic phosphate expressed by the general formula (1) prior to the mixing process with the heat-curable resin or the thermoplastic resin. Therefore, it is preferable to add the acidic phosphate expressed by the general formula (1) at the time of the mixing of the aluminum nitride particles and the heat-curable resin or the thermoplastic resin, or add the acidic phosphate expressed by the general formula (1) to total amount or portion of the heat-curable resin or the thermoplastic resin, then to mix with other components, in order to achieve high thermal conductivity of the resin composition. Although the reasons for this are not theoretically bound, when the aluminum nitride particles and the acidic phosphate expressed by the general formula (1) are brought into contact in advance, the side chain of the acidic phosphate at the surface of the aluminum nitride shrinks, thus the affinity between the aluminum nitride particles and the heat-curable resin or the thermoplastic resin are not good. On the other hand, in case the acidic phosphate expressed by the general formula (1) is mixed with the resin in advance, the side chain of the acidic phosphate is sufficiently extended, thus the affinity between the aluminum nitride particles and the resin becomes good, hence the effect of the aluminum nitride particles on thermal conductivity is speculated to become excellent. Further, in some cases, it is preferable to contact the aluminum nitride particles with the acidic phosphate expressed by the general formula (1) at the early stage. For example, in case of using the basic curing agent such as amine or so, the aluminum nitride particle, and the mixture of the acidic phosphate expressed by the general formula (1) and total amount or portion of the heat-curable resin or the thermoplastic resin are mixed in advance, then the curing agent and the remaining parts of the heat-curable resin or the thermoplastic resin can be added. Also, it is preferable that the aluminum nitride particles, and the mixture of the acidic phosphate expressed by the general formula (1) and total amount or portion of the heat-curable resin or the thermoplastic resin are mixed in advance, then the remaining part of the heat-curable resin or the thermoplastic resin are added and mixed, then at the end adding the curing agent. In the present invention, it is particularly preferable to contact the acidic phosphate expressed by the general formula (1) and the aluminum nitride particles under the presence of the resin component (the heat-curable resin or the thermoplastic resin). Also, in between these mixing, the storage treatment which is called "aging" is preferably carried out while under heating, with the temperature of 40 to 100°C, and the heating time would be 1 to 72 hours. The reason why such mixing procedure is preferable is not theoretically bound, however when the basic curing agent and the acidic phosphate are brought into contact in advance, these forms a salt, the effect of the curing agent could be hampered. The aluminum nitride itself is basic, and in order to accomplish the present invention, it seems to be preferable that the sufficient adsorption of the acidic phosphate to the surface of the aluminum nitride particles will promote the effect of the acidic phosphate, while suppressing the side effect on other basic components.

The mixing method for obtaining the resin composition of the present invention is not particularly limited, and it can be carried out by using the general mixing machine. As the example of such mixing machine, a planetary mixer, a kneader such as trimix or so, a roll kneader such as triple roll or so, a grinder or so may be mentioned.

The shaping and curing of the resin composition of the present invention is not only molding and curing in the mold, but it also includes coating layer formation on the solid surface, or the adhesive layer formation by pressing the composition between two solid surfaces. Therefore, the highly thermally conductive resin of the present invention made by shaping and curing the resin composition of the present invention is obtained by various methods. In case the resin composition contains the heat-curable resin, the curing takes place with the formation of the three dimensional network structure by crosslinking, and in case it contains the thermoplastic resin, the curing takes place with the solidification during the cooling step. The condition such as temperature and time or so for this curing is determined appropriately in order to match with the resin, curing agent and other additives or so.

As the application of the resin composition and the highly thermally conductive resin article of the present invention, the material, which dissipate heat efficiently from the semiconductors used in home electronics appliances, automobiles, laptop computers or so, may be mentioned. As examples of these, a heat dissipating grease, a heat dissipating gel, a phase change sheet and adhesive sheet or so may be mentioned, and the insulation layer used for a metal base substrate, a printed substrate, a flexible printed substrate or so, furthermore a semiconductor sealing agent, an underfill, a housing material and a heat dissipating fin or so may be mentioned.

The thermal conductivity of the highly thermally conductive resin article of the present invention is not particularly limited, however 4 W/mK or more is preferable and more preferably 5 W/km or more, in order to dissipate heat efficiently from the semiconductors.

### EXAMPLE

Hereinafter, the present invention will be described based on the examples and the using examples, however the present invention is not to be limited thereto.

The testing methods used in the present invention will be shown in below.

### (1) The viscosity of the resin composition:

The viscosity after 120 seconds from the start of the measuring was determined with at a parallel plate of 20mm diameter, a gap width of 1.00 mm, the frequency of 0.1 Hz, and the steady stress of 1000 Pa at 25°C, using the dynamic viscoelasticity measuring equipment (STRESS TECH: made by Seiko Instruments Inc).

### (2) The thermal conductivity of the highly thermally conductive resin molded article:

The heat-curable resin composition was diluted to a suitable viscosity with toluene or 2-methoxyethanol, then it was coated on mold release PET film using bar coater (PI-1210:made by TESTER SANGYO CO.,LTD), and PET film was released after stored for 4 hours at 150°C. For the heat-curable imide resin composition, the sample piece was further placed between Teflon plate then the final curing was carried out for 2 hours at 250°C. In case the resin of the resin composition is the millable type silicone, or polyphenylenesulfide which is the thermoplastic resin, the resin composition was placed between Teflon plates then it was pressed at the temperature recommended by the resin producer. Note that, for each resin, the pressure was regulated so that the film thickness becomes about 200 to 300 µm. The thermal conductivity of these samples were measured by quick thermal conductivity meter (QTM-500: made by KYOTO ELECTRONICS MANUFACTURING CO.,LTD). As the references, quartz glass, silicone rubber and zirconium having the thickness of 2 cm, the length of 15 cm and the width of 6 cm were used.

### (The production example 1 of the water resistant aluminum nitride particles)

One (1) kg of aluminum nitride particles (Grade H, BET specific surface area 2.6 m²/g: made by TOKUYAMA CORPORATION), 7.1 g of phosphoric acid (Special grade: Purity 85 wt%, made by Wako Pure Chemical Industries, Ltd) and 1.5 kg of ethanol was mixed and dispersed with Attritor (MA-01 C: made by MITSUI MIIKE MACHINERY Co.,Ltd), then the mixture was dried for 15 hours at 120°C. Two (2) g of the obtained particles and 100 g of deionized water was placed in the pressure resistant container made of Teflon, and the container was stored for 24 hours at 120°C, then the pH of the water was measured. The pH was about 6, indicating that the hydrolysis of the aluminum nitride was significantly suppressed. (When Grade H was stored under the same condition, the pH was about 12.) Hereinafter, these particles will be referred as the aluminum nitride particle A.

### (The production example 2 of the water resistant aluminum nitride particles)

One (1) kg of aluminum nitride particles (Grade H, BET specific surface area 2.6 m²/g: made by TOKUYAMA CORPORATION), 4.7 g of phosphoric acid (Special grade: Purity 85 wt%, made by Wako Pure Chemical Industries, Ltd), 0.1 g of phenyl phosphonic acid (made by Wako Pure Chemical Industries, Ltd) and 1.5 kg of isopropanol were mixed and dispersed in the vibrating ball mill (New Light made by CHUO KAKOHKI CO., LTD) then it was dried for 15 hours at 200°C. Two (2) g of the obtained particles and 100 g of deionized water were placed in the pressure resistant container made of Teflon, and the container was stored for 24 hours at 120°C, then the pH of the water was measured. The pH was about 6, indicating that the hydrolysis of the aluminum nitride was significantly suppressed. (When Grade H was stored under the same condition, the pH was about 12.) Hereinafter, these particles will be referred as the aluminum nitride particle B.

### (The production example 3 of the water resistant aluminum nitride particles)

One (1) kg of aluminum nitride particles (Grade JD, BET specific surface area 2.2 m²/g: made by TOYO ALUMINIUM K.K.), 6.0 g of butyl phosphoric acid (Phoslex A-4: made by SC Organic Chemical Co., Ltd) and 1.5 kg of ethanol were mixed and dispersed by Attritor (MA-01 C: made by MITSUI MIIKE MACHINERY Co.,Ltd), then it were dried for 15 hours at 100°C. Two (2) g of the obtained particles and 100 g of deionized water was placed in the pressure resistant container made of Teflon, and the container was stored for 24 hours at 120°C, then the pH of the water was measured. The pH was about 6, indicating that the hydrolysis of the aluminum nitride was significantly suppressed. (When Grade JD was stored under the same condition, the pH was about 12.) Hereinafter, these particles will be referred as the aluminum nitride particle C.

### (The production example 4 of the water resistant aluminum nitride particles)

One (1) kg of aluminum nitride particle (Grade F, BET specific surface area 3.4 m²/g: made by TOKUYAMA CORPORATION), 7.0 g of aluminum phosphate solution (100L, Al₂O₃/8.5%, P₂O₅/33.0%: made by TAKI CHEMICAL CO., LTD), 4.0 g of octyl phosphate (Phoslex A-8: made by SC Organic Chemical Co., Ltd) and 1 kg of water were mixed and heated to form a homogeneous solution, then the mixture was treated for three times by ultrasonic disperser (GSD600HAT: made by Ginsen Group Corporation) at the flow rate of 0.5 L/min. Then, the mixture was dried with a spray drier (R-100: made by PRECI CO., LTD) at the entrance temperature of 180°C, followed by a vacuum drying for 15 hours at 80°C. Two (2) g of the obtained particles and 100 g of deionized water were placed in the pressure resistant container made of Teflon, and the container was stored for 24 hours at 120°C, then the pH of the water was measured. The pH was about 6, indicating that the hydrolysis of the aluminum nitride was significantly suppressed. (When Grade F was stored under the same condition, the pH was about 12.) Hereinafter, these particles will be referred as the aluminum nitride particle D.

### (The production example 5 of the water resistant aluminum nitride particles)

One (1) kg of aluminum nitride particles (average particle diameter of 1.1 µm, BET specific surface area 1.8 of m²/g: made by TOKUYAMA CORPORATION), 3.0 g of aluminum phosphate solution (100L, Al₂O₃/8.5%, P₂O₅/33.0%: made by TAKI CHEMICAL CO., LTD), 5.0 g of hexyl phosphate (Phoslex A-6: made by SC Organic Chemical Co., Ltd) and 1 kg of water were mixed and heated to form a homogeneous solution, then the mixture was treated for three times by ultrasonic disperser (GSD600HAT: made by Ginsen Group Corporation) at the flow rate of 0.5 L/min. Then, the mixture was dried with a spray drier (R-100: made by PRECI CO., LTD) at the entrance temperature of 200°C, followed by a vacuum drying for 15 hours at 90°C.

Two (2) g of the obtained particles and 100 g of deionized water were placed in the pressure resistant container made of Teflon, and the container was stored for 24 hours at 120°C, then the pH of the water was measured. The pH was about 6, indicating that the hydrolysis of the aluminum nitride was significantly suppressed. (When non-treated aluminum nitride was stored under the same condition, the pH was about 12.) Hereinafter, these particles will be referred as the aluminum nitride particle E.

### (The production example 6 of the water resistant aluminum nitride particles)

One (1) kg of aluminum nitride particles (average particle diameter of 1.3 µm, BET specific surface area of 1.3 m²/g: made by TOKUYAMA CORPORATION), 4.0 g of aluminum phosphate solution (100L, Al₂O₃/8.5%, P₂O₅/33.0%: made by TAKI CHEMICAL CO., LTD), 3.0 g of lauryl phosphoric acid (ML-200: made by TOHO Chemical Industry Co.,Ltd) and 1 kg of water were mixed and heated to form a homogeneous solution, then the mixture was treated for three times by ultrasonic disperser (GSD600HAT: made by Ginsen Group Corporation) at the flow amount of 0.5 L/min. Then, the mixture was dried with a spray drier (R-100: made by PRECI CO., LTD) at the entrance temperature of 200°C, followed by a vacuum drying for 15 hours at 80°C.

Two (2) g of the obtained particles and 100 g of ion exchange water were placed in the pressure resistance container made of Teflon, and the container was stored for 24 hours at 120°C, then the pH of the water was measured. The pH was about 6, indicating that the hydrolysis of the aluminum nitride was significantly suppressed. (When non-treated aluminum nitride was stored under the same condition, the pH was about 12.) Hereinafter, these particles will be referred as the aluminum nitride particle F.

### (The production example 7 of the water resistant aluminum nitride particles)

One (1) kg of aluminum nitride particles (average particle diameter of 3.9 µm, BET specific surface area of 0.7 m²/g: made by TOKUYAMA CORPORATION), 2.5 g of aluminum phosphate solution (100L, Al₂O₃/8.5%, P₂O₅/33.0%: made by TAKI CHEMICAL CO., LTD), 1.5 g of lauryl phosphoric acid (ML-200: made by TOHO Chemical Industry Co.,Ltd) and 1 kg of water were mixed and heated to form a homogeneous solution, then the mixture was treated for three times by ultrasonic disperser (GSD600HAT: made by Ginsen Group Corporation) at the rate of 0.5 L/min. Then, the mixture was dried by a spray drier (R-100: made by PRECI CO., LTD) at the entrance temperature of 200°C, followed by a vacuum drying for 15 hours at 80°C.

Two (2) g of the obtained particles and 100 g of deionized water were placed in the pressure resistant container made of Teflon, and stored for 24 hours at 120°C, then the pH of the water was measured. The pH was about 6, indicating that the hydrolysis of the aluminum nitride was significantly suppressed. (When non-treated aluminum nitride was stored under the same condition, the pH was about 12.) Hereinafter, these particles will be referred as the aluminum nitride particle G.

### (The production example 8 of the aluminum nitride particles)

0.5 kg of aluminum nitride particles (average particle diameter of 1.3 µm, BET specific surface area of 1.3 m²/g: made by TOKUYAMA CORPORATION), 0.5 kg of aluminum nitride particles (average particle diameter of 3.9 µm, BET specific surface area 0.7 of m²/g: made by TOKUYAMA CORPORATION), 3.9 g of acidic phosphate (RS-610: made by TOHO Chemical Industry Co.,Ltd) and 1 kg of ethanol were mixed and heated to form a homogenous solution, then the mixture was treated for three times by ultrasonic disperser (GSD600HAT: made by Ginsen Group Corporation) at the flow rate of 0.5 L/min. Then, it was dried by a spray drier (R-100: made by PRECI CO., LTD) at the entrance temperature of 200°C, followed by a vacuum drying for 15 hours at 80°C. Hereinafter, these particles will be referred as the aluminum nitride particle H.

### (The production example 9 of the aluminum nitride particles)

0.5 kg of aluminum nitride particles (average particle diameter of 1.3 µm, BET specific surface area of 1.3 m²/g: made by TOKUYAMA CORPORATION), 0.5 kg of aluminum nitride particles (average particle diameter of 3.9 µm, BET specific surface area of 0.7 m²/g: made by TOKUYAMA CORPORATION), 3.9 g of acidic phosphate (RS-410: made by TOHO Chemical Industry Co.,Ltd) and 1 kg of ethanol were mixed and heated to form an uniform solution, then it was treated for three times by ultrasonic disperser (GSD600HAT: made by Ginsen Group Corporation) at the flow rate of 0.5 L/min. Then, the mixture was dried by a spray drier (R-100: made by PRECI CO., LTD) at the entrance temperature of 200°C, followed by a vacuum drying for 15 hours at 80°C. Hereinafter, these particles will be referred as the aluminum nitride particle I.

### (The production example 10 of the aluminum nitride particles)

0.5 kg of aluminum nitride particles (average particle diameter of 1.3 µm, BET specific surface area of 1.3 m²/g: made by TOKUYAMA CORPORATION), 0.5 kg of aluminum nitride particles (Grade JD, BET specific surface area of 2.2 m²/g: made by TOYO ALUMINIUM K.K.), 3.9 g of acidic phosophate (RS-410: made by TOHO Chemical Industry Co., Ltd) and 1 kg of ethanol were mixed and heated to form a homogenous solution, then the mixture was treated for three times by ultrasonic disperser (GSD600HAT: made by Ginsen Group Corporation) at the flow rate of 0.5 L/min. Then, the mixture was dried by a spray drier (R-100: made by PRECI CO., LTD) at the entrance temperature of 200°C, followed by a vacuum drying for 15 hours at 80°C. Hereinafter, these particles will be referred as the aluminum nitride particle J.

### (Example 1)

Ten (10) g of the addition type silicone (TSE 325, silicone resin including vinyl group, containing hydrosilane compound and platinum catalyst: made by Momentive Performance Materials Inc) and 0.1 g of acidic phosphate (Phosphanol RS-410: made by TOHO Chemical Industry Co., Ltd) were mixed to form a homogeneous solution. Then, 40 g of aluminum nitride particles (Grade H, BET specific surface area of 2.6 m²/g: made by TOKUYAMA CORPORATION) was added to this solution, and kneaded.

The viscosity of the obtained resin composition and the thermal conductivity of the highly thermally conductive resin article obtained from the resin composition were measured, and the results are shown in Table 1.

### (Example 2)

Ten (10) g of the addition type silicone (TSE 325: made by Momentive Performance Materials Inc) and 0.2 g of acidic phosphate (Phosphanol RS-610: made by TOHO Chemical Industry Co., Ltd) were mixed to form a homogeneous solution. Then, 20 g of the water resistant aluminum nitride particle E and 20 g of aluminum oxide powder (AX10-32, average particle diameter 9.1 µm, BET specific surface area 0.28 m²: made by Micron Inc.) were added, and kneaded.

The viscosity of the obtained resin composition and the thermal conductivity of the highly thermally conductive resin article obtained from the resin composition were measured, and the results are shown in Table 1.

### (Example 3)

Ten (10) g of the addition type silicone (TSE 325: made by Momentive Performance Materials Inc) and 0.1 g of acidic phosphate (Phosphanol GF-199: made by TOHO Chemical Industry Co., Ltd) were mixed to form an uniform solution. Then, 20 g of the aluminum nitride particle A and 25 g of the aluminum nitride particle G were added, and kneaded.

The viscosity of the obtained resin composition and the thermal conductivity of the highly thermally conductive resin molded article obtained from the resin composition were measured, and the results are shown in Table 1.

### (Example 4)

100g of the millable type silicone rubber (TSE 2913U, silicone resin including vinyl group: made by Momentive Performance Materials Inc) 2 g of acidic phosphate (Phosphanol RS-710: made by TOHO Chemical Industry Co., Ltd) were mixed using biaxial kneading excluder TEM26SS (made by TOSHIBA MACHINE CO., LTD) to form a homogeneous solution. Then, this rubber, and 0.5 g of 2,4-dichlorobenzoylperoxide (made by NOF CORPORATION), 200g of aluminum nitride particle B and 200 g of the aluminum nitride particle G were kneaded using biaxial kneading excluder TEM26SS (made by TOSHIBA MACHINE CO., LTD).

The thermal conductivity of the highly thermally conductive resin molded article obtained from said resin composition was measured, and the results are shown in Table 1.

### (Example 5)

Five (5) g of dimethacrylate (BPE-100, average molecular weight 478: made by Shin-Nakamura Chemical Co., Ltd) of the ethyleneoxide adduct of bisphenol A, 5 g of triethyleneglycol dimethacrylate (3G: made by Shin-Nakamura Chemical Co., Ltd), 0.15 g of acidic phosphate (Phosphanol RS-710: made by TOHO Chemical Industry Co., Ltd) and 0.1 g of benzoylperoxide (made by NOF CORPORATION) were mixed to form a homogeneous solution. Then, to this solution, 10 g of the aluminum nitride particle C and 20 g of the aluminum nitride particle G were added, and kneaded.

The viscosity of the obtained resin composition and the thermal conductivity of the highly thermally conductive resin molded article obtained from the resin composition were measured, and the results are shown in Table 1.

### (Example 6)

Five (5) g of dimethacrylate (BPE-100: made by Shin-Nakamura Chemical Co., Ltd) of the ethyleneoxide adduct of bisphenol A, 5 g of triethyleneglycol dimethacrylate (3G: made by Shin-Nakamura Chemical Co., Ltd), 0.20 g of acidic phosphate (Phosphanol RS-710: made by TOHO Chemical Industry Co., Ltd) and 0.1 g of benzoylperoxide (made by NOF CORPORATION) were mixed to form a homogeneous solution. Then, to this solution, 30 g of the aluminum nitride particle D and 15 g of the aluminum nitride particle G were added, and kneaded.

The viscosity of the obtained resin composition and the thermal conductivity of the highly thermally conductive resin article obtained from said resin composition were measured, and the results are shown in Table 1.

### (Example 7)

Seven (7) g of dimethacrylate (BPE-100, average molecular weight 478: made by Shin-Nakamura Chemical Co., Ltd) of the ethyleneoxide adduct of bisphenol A, 3 g of triethyleneglycol dimethacrylate (3G: made by Shin-Nakamura Chemical Co., Ltd), 0.07 g of acidic phosphate (Phosphanol RA-600: made by TOHO Chemical Industry Co., Ltd) and 0.1 g of benzoylperoxide (made by NOF CORPORATION) were mixed to form a homogeneous solution. Then, to this solution, 45 g of the aluminum nitride particle E was added, and kneaded.

The viscosity of the obtained resin composition and the thermal conductivity of the highly thermally conductive resin molded article obtained from the resin composition were measured, and the results are shown in Table 1.

### (Example 8)

Seven (7) g of dimethacrylate (BPE-100, average molecular weight 478: made by Shin-Nakamura Chemical Co., Ltd) of the ethyleneoxide adduct additives of bisphenol A, 3 g of triethyleneglycol dimethacrylate (3G: made by Shin-Nakamura Chemical Co., Ltd), 0.25 g of acidic phosphate (Phosphanol RS-610: made by TOHO Chemical Industry Co., Ltd) and 0.1 g of benzoylperoxide (made by NOF CORPORATION) were mixed to form a homogeneous solution. Then, to this solution, 45 g of the aluminum nitride particle E was added, and kneaded.

The viscosity of the obtained resin composition and the thermal conductivity of the highly thermally conductive resin article obtained from the resin composition were measured, and the results are shown in Table 1.

### (Example 9)

Seven (7) g of dimethacrylate (BPE-100, average molecular weight 478: made by Shin-Nakamura Chemical Co., Ltd) of the ethyleneoxide adduct of bisphenol A, 3 g of triethyleneglycol dimethacrylate (3G: made by Shin-Nakamura Chemical Co., Ltd), 0.25 g of acidic phosphate (BYK-W9010: made by BYK-chemie Japan) and 0.1 g of benzoylperoxide (made by NOF CORPORATION) were mixed to form a homogeneous solution. Then, to this solution, 45 g of the aluminum nitride particle E was added, and kneaded.

The viscosity of the obtained resin composition and the thermal conductivity of the highly thermally conductive resin article obtained from the resin composition were measured, and the results are shown in Table 2.

### (Example 10)

Five (5) g of dimethacrylate (BPE-200, average molecular weight 540: made by Shin-Nakamura Chemical Co., Ltd) of the ethyleneoxide adduct of bisphenol A, 5 g of triethyleneglycol dimethacrylate (3G: made by Shin-Nakamura Chemical Co., Ltd), 0.25 g of acidic phosphate (Phosphanol RS-610: made by TOHO Chemical Industry Co., Ltd) and 0.1 g of benzoylperoxide (made by NOF CORPORATION) were mixed to form a homogeneous solution. Then, to this solution, 20 g of the aluminum nitride particle F and 30 g of the aluminum nitride particle of the production example 7 were added, and kneaded.

The viscosity of the obtained resin composition and the thermal conductivity of the highly thermally conductive resin article obtained from the resin composition were measured, and the results are shown in Table 2.

### (Example 11)

160 g of the aluminum nitride particle F and 160 g of the aluminum nitride particle G were placed in the container equipped with the stirrer, the reflux condenser and nitrogen introducing pipe, together with 29.2 g of 1,3-bis(3-aminophenoxy)benzene as the aromatic diamine and 320 g of N-methyl-2-pyrrolidone as the solvent, then the stirring was carried out at the room temperature and under the nitrogen atmosphere. To this, while stirring, 30.9 g of 3,3',4,4'-biphenyltetracarboxylate dianhydride was added, and the temperature was raised to 50°C then stirred for 1 hour. Then, at the end, 1.2 g of acidic phosphate (Phosphanol RS-610: made by TOHO Chemical Industry Co., Ltd) was added, thereby the heat-curable imide resin composition was obtained.

The viscosity of the obtained resin composition and the thermal conductivity of the highly thermally conductive resin article obtained from the resin composition were measured, and the results are shown in Table 2.

### (Example 12)

200 g of the aluminum nitride particle F and 120 g of the alumina particle (AX10-32, average particle diameter of 9.1 µm, BET specific surface area of 0.28 m²/g) were placed in the container equipped with the stirrer, the reflux condenser and nitrogen introducing pipe, together with 29.2 g of 1,3-bis(3-aminophenoxy)benzene as the aromatic diamine and 320 g of N-methyl-2-pyrrolidone as the solvent, then the stirring was carried out at the room temperature and under the nitrogen atmosphere. To this, while stirring, 30.9 g of 3,3',4,4'-biphenyltetracarboxylate dianhydride was added, and the temperature was raised to 50°C then stirred for 1 hour. Then, at the end, 1.5 g of acidic phosphate (Phosphanol RA-600: made by TOHO Chemical Industry Co., Ltd.) was added, thereby the heat-curable imide resin composition was obtained.

The viscosity of the obtained resin composition and the thermal conductivity of the highly thermally conductive resin article obtained from the resin composition were measured, and the results are shown in Table 2.

### (Example 13)

8.7 g of propyleneoxide additives (EXCENOL 828, molecular weight of 5000: made by ASAHI GLASS CO.,LTD.) of glycerine which is one type of polyoxypolyalkylenepolyol, 1.3 g of propyleneoxide additives (EXCENOL 837, the molecular weight of 6000: made by ASAHI GLASS CO.,LTD.) of glycerine, 0.05 g of dibutyltin dilaurate (made by Tokyo Chemical Industry Co., Ltd), 0.1 g of DBU octylate (made by Sigma-Aldrich Co. LLC.) and 0.2 g of acidic phosphate (Phosphanol RS-710: made by TOHO Chemical Industry Co., Ltd) were mixed to form an uniform solution. To this solution, 40 g of the aluminum nitride particles (Grade JD, BET specific surface area of 2.2 m²/g: made by TOYO ALUMINIUM K.K.) were added, and kneaded. Then, to this mixture, 0.7 g of 4,4'-diphenylmethanediisocyanate (made by Tokyo Chemical Industry Co., Ltd) was further added, and kneaded. The viscosity of the obtained resin composition and the thermal conductivity of the highly thermally conductive resin article obtained from the resin composition were measured, and the results are shown in Table 2.

### (Example 14)

8.7 g of propyleneoxide additives (EXCENOL 828: made by ASAHI GLASS CO.,LTD) of glycerine, 1.3 g of polyoxypolypropylenetriol (EXCENOL 837: made by ASAHI GLASS CO., LTD), 0.05 g of dibutyltin dilaurate (made by Tokyo Chemical Industry Co., Ltd), 0.1 g of DBU octylate (made by Sigma-Aldrich Co. LLC) and 0.2 g of acidic phosphate (Phosphanol RA-600: made by TOHO Chemical Industry Co., Ltd) were mixed to form an uniform solution. To this solution, 25 g of the aluminum nitride particle E and 20 g of the water resistant aluminum nitride particle F were added, and kneaded. Then, to this mixture, 0.7 g of 4,4'-diphenylmethanediisocyanate (made by Tokyo Chemical Industry Co., Ltd) was further added, and kneaded. The viscosity of the obtained resin composition and the thermal conductivity of the highly thermally conductive resin article obtained from the resin composition were measured, and the results are shown in Table 2.

### (Example 15)

300 g of the aluminum nitride particle E, 100 g of polyphenylenesulfide (Linear type: FZ-2100, linear form: made by DIC Corporation) and 2 g of acidic phosphate (Phosphanol RA-600: made by TOHO Chemical Industry Co., Ltd) were mixed, then it was melt kneaded at 320°C using biaxial kneading excluder TEM26SS (made by TOSHIBA MACHINE CO., LTD). Then, the pellet which was obtained by melt kneading was dried by blowing drier at 120°C for 3 hours. The viscosity of the obtained resin composition and the thermal conductivity of the highly thermally conductive resin article obtained from the resin composition were measured, and the results are shown in Table 2.

### (Example 16)

350 g of the aluminum nitride particle F, 100 g of polyphenylenesulfide (Super Tough:Z-200-E5: made by DIC Corporation) and 2 g of acidic phosphate (Phosphanol RA-600: made by TOHO Chemical Industry Co., Ltd) were mixed, then it was melt kneaded at 320°C using biaxial kneading excluder TEM26SS (made by TOSHIBA MACHINE CO., LTD). Then, the pellet which was obtained by melt kneading was dried by blowing drier at 120°C for 3 hours. The viscosity of the obtained resin composition and the thermal conductivity of the highly thermally conductive resin article obtained from the resin composition were measured, and the results are shown in Table 2.

### (Comparative example 1)

Ten (10) g of the addition type silicone (TSE 325: made by Momentive Performance Materials Inc) and 40 g of the aluminum nitride particle (Grade H, BET specific surface area of 2.6m²/g: made by TOKUYAMA CORPORATION) were added and kneaded.

The viscosity of the obtained resin composition and the thermal conductivity of the highly thermally conductive resin article obtained from the resin composition were measured, and the results are shown in Table 3.

### (Comparative example 2)

Ten (10) g of the addition type silicone (TSE 325: made by Momentive Performance Materials Inc) and 0.2 g of acidic phosphate (the mixture of monoisopropylphosphate and diisopropylphosphate, A-3: made by SC Organic Chemical Co., Ltd) were mixed to form an uniform solution. To this solution, 20 g of the water resistant aluminum nitride particle E and 20 g of aluminum oxide powder (AX10-32, average particle diameter of 9.1 µm, BET specific surface area of 0.28 m²/g: made by Micron Inc) were added, and kneaded.

The viscosity of the obtained resin composition and the thermal conductivity of the highly thermally conductive resin article obtained from the resin composition were measured, and the results are shown in Table 3.

### (Comparative example 3)

Ten (10) g of the addition type silicone (TSE 325: made by Momentive Performance Materials Inc) and 0.3 g of lauric acid (made by Tokyo Chemical Industry Co., Ltd) were mixed to form an uniform mixture. To this solution, 20 g of the aluminum nitride particle A and 25 g of the aluminum nitride particle G were added and kneaded.

The viscosity of the obtained resin composition and the thermal conductivity of the highly thermally conductive resin article obtained from the resin composition were measured, and the results are shown in Table 3.

### (Comparative example 4)

Ten (10) g of the addition type silicone (TSE 325: made by Momentive Performance Materials Inc) and 0.2 g of tetraethyleneglycollaurylether (PegnoL L-4: made by TOHO Chemical Industry Co., Ltd) were mixed to form an uniform solution. To this solution, 20 g of the aluminum nitride particle A and 25 g of the aluminum nitride particle G were added, and kneaded.

The viscosity of the obtained resin composition and the thermal conductivity of the highly thermally conductive resin article obtained from the resin composition were measured, and the results are shown in Table 3.

### (Comparative example 5)

Ten (10) g of the addition type silicone (TSE 325: made by Momentive Performance Materials Inc) and 0.2 g of phosphate which does not have acidic group ([(CH₃)₂C₆H₃O]₂P(O)OC₆H₄OP(O)[OC₆H₃(CH₃)₂]₂ PX-200: made by DAIHACHI CHEMICAL INDUSTRY CO., LTD) were mixed to form an uniform solution. To this solution, 20 g of the aluminum nitride particle A and 25 g of the aluminum nitride particle G were added and kneaded.

The viscosity of the obtained resin composition and the thermal conductivity of the highly thermally conductive resin article obtained from the resin composition were measured, and the results are shown in Table 3.

### (Comparative example 6)

Seven (7) g of dimethacrylate (BPE-100: made by Shin-Nakamura Chemical Co., Ltd) of the ethyleneoxide additives of bisphenol A, 3 g of triethyleneglycol dimethacrylate (3G: made by Shin-Nakamura Chemical Co., Ltd), 0.1 g of benzoylperoxide (made by Tokyo Chemical Industry Co., Ltd) and 0.25 g of the acidic phosphate (Phosphanol RS-610: made by TOHO Chemical Industry Co., Ltd) were mixed to form an uniform solution. To this solution, 40 g of the alumina particle (AKP-20, BET specific surface area of 5 m²/g: made by Sumitomo Chemical Co., Ltd) were added and kneaded.

The viscosity of the obtained resin composition and the thermal conductivity of the highly thermally conductive resin article obtained from the resin composition were measured, and the results are shown in Table 3.

### (Comparative example 7)

Seven (7) g of dimethacrylate (BPE-100: made by Shin-Nakamura Chemical Co., Ltd) of the ethyleneoxide additives of bisphenol A, 3 g of triethyleneglycol dimethacrylate (3G: made by Shin-Nakamura Chemical Co., Ltd) and 0.1 g of benzoylperoxide (made by Tokyo Chemical Industry Co., Ltd) were mixed to form an uniform solution. To this solution, 45 g of the aluminum nitride particle E was added and kneaded.

The viscosity of the obtained resin composition and the thermal conductivity of the highly thermally conductive resin article obtained from the resin composition were measured, and the results are shown in Table 3.

### (Comparative example 8)

160 g of the aluminum nitride particle F and 160 g of the aluminum nitride particle G were placed in the container equipped with the stirrer, the reflux condenser and nitrogen introducing pipe, together with 29.2 g of 1,3-bis(3-aminophenoxy)benzene as the aromatic diamine and 320 g of N-methyl-2-pyrrolidone as the solvent, then the stirring was carried out at the room temperature and under the nitrogen atmosphere. To this, while stirring, 30.9 g of 3,3',4,4'-biphenyltetracarboxylate dianhydride was added, and the temperature was raised to 50°C then stirred for 1 hour, thereby the heat-curable imide resin composition was obtained.

The viscosity of the obtained resin composition and the thermal conductivity of the highly thermally conductive resin article obtained from the resin composition were measured, and the results are shown in Table 3.

### (Comparative example 9)

320 g of the aluminum nitride particle H and was placed in the container equipped with the stirrer, the reflux condenser and nitrogen introducing pipe, together with 29.2 g of 1,3-bis(3-aminophenoxy)benzene as the aromatic diamine and 320 g of N-methyl-2-pyrrolidone as the solvent, then the stirring was carried out at the room temperature and under the nitrogen atmosphere. To this, while stirring, 30.9 g of 3,3',4,4'-biphenyltetracarboxylate dianhydride was added, and the temperature was raised to 50°C then stirred for 1 hour, thereby the heat-curable imide resin composition was obtained.

The viscosity of the obtained resin composition and the thermal conductivity of the highly thermally conductive resin article obtained from the resin composition were measured, and the results are shown in Table 4.

### (Comparative example 10)

Ten (10) g of silicone (TSE 325, silicone resin including vinyl group, containing addition type hydrosilane compound which cures by addition reaction, and platinum catalyst: made by Momentive Performance Materials Inc) and 40 g of aluminum nitride particle I were added and kneaded.

The viscosity of the obtained resin composition and the thermal conductivity of the highly thermally conductive resin article obtained from the resin composition were measured, and the results are shown in Table 4.

### (Comparative example 11)

8.7 g of propyleneoxide additives (EXCENOL 828, the molecular weight 5000: made by ASAHI GLASS CO., LTD) of glycerine which is one type of polyoxypolyalkylenepolyol, 1.3 g of propyleneoxide additives (EXCENOL 837, the molecular weight 6000: made by ASAHI GLASS CO., LTD) of glycerine, 0.05 g of dibutyltin dilaurate (made by Tokyo Chemical Industry Co., Ltd) and 0.1 g of DBU octylate (made by Sigma-Aldrich Co. LLC) were mixed to form an uniform solution. To this solution, 40 g of the aluminum nitride particle J was added, and kneaded. Then, to this mixture, 0.7 g of 4,4'-diphenylmethanediisocyanate (made by ASAHI GLASS CO., LTD) was further added, and kneaded. The viscosity of the obtained resin composition and the thermal conductivity of the highly thermally conductive resin article obtained from said resin composition were measured, and the results are shown in Table 4.

### (Comparative example 12)

8.7 g of propyleneoxide additives (EXCENOL 828: made by ASAHI GLASS CO., LTD) of glycerine, 1.3 g of propyleneoxide additives (EXCENOL 837: made by ASAHI GLASS CO., LTD) of glycerine, 0.05 g of dibutyltin dilaurate (made by Tokyo Chemical Industry Co., Ltd), 0.1 g of DBU octylate (made by Sigma-Aldrich Co. LLC) and 0.25 g of acidic phosphate (Phosphanol RS-610: made by TOHO Chemical Industry Co., Ltd) were mixed to form an uniform solution. To this solution, 40 g the alumina particle (AKP-20, BET specific surface area of 5 m²/g: made by Sumitomo Chemical Co., Ltd) were added, and kneaded. Then, to this mixture, 0.7 g of 4,4'-diphenylmethanediisocyanate (made by Tokyo Chemical Industry Co., Ltd) was further added, and kneaded. The viscosity of the obtained resin composition and the thermal conductivity of the highly thermally conductive resin article obtained from said resin composition were measured, and the results are shown in Table 4.

### (Comparative example 13)

8.7 g of propyleneoxide additives (EXCENOL 828: made by ASAHI GLASS CO., LTD) of glycerine, 1.3 g of propyleneoxide additives (EXCENOL 837: made by ASAHI GLASS CO., LTD) of glycerine, 0.05 g of dibutyltin dilaurate (made by Tokyo Chemical Industry Co., Ltd) and 0.1 g of DBU octylate (made by Sigma-Aldrich Co. LLC) were mixed to form an uniform solution. Then, to this solution, 40 g of the aluminum nitride particle (Grade JD, BET specific surface area of 2.2 m²/g: made by TOYO ALUMINIUM K.K.) was added, and kneaded. Then, to this mixture, 0.7 g of 4,4'-diphenylmethanediisocyanate (made by Tokyo Chemical Industry Co., Ltd) was further added, and kneaded. The viscosity of the obtained resin composition and the thermal conductivity of the highly thermally conductive resin article obtained from the resin composition were measured, and the results are shown in Table 4.

### (Comparative example 14)

8.7 g of propyleneoxide additives (EXCENOL 828: made by ASAHI GLASS CO., LTD) of glycerine, 1.3 g of propyleneoxide additives (EXCENOL 837: made by ASAHI GLASS CO., LTD) of glycerine, 0.05 g of dibutyltin dilaurate (made by Tokyo Chemical Industry Co., Ltd), 0.1 g of DBU octylate (made by Sigma-Aldrich Co. LLC) and the aluminate coupling agent (PLENACT AL-M, acetoalkoxyaluminumdisopropylate: made by Ajinomoto Fine-Techno Co., Inc) were mixed to form an uniform solution. Then, to this solution, 40 g of the aluminum nitride particle (Grade JD, BET specific surface area 2.2 m²/g: made by TOYO ALUMINIUM K.K.) was added, and kneaded. Then, to this mixture, 0.7 g of 4,4'-diphenylmethanediisocyanate (made by Tokyo Chemical Industry Co., Ltd) was further added, and kneaded.

The viscosity of the obtained resin composition and the thermal conductivity of the highly thermally conductive resin article obtained from the resin composition were measured, and the results are shown in Table 4.

### (Comparative example 15)

350 g of the aluminum nitride particle F and 100 g of PPS resin (Z-200-E5: made by DIC Corporation) were mixed, then it was melt kneaded at 320°C using biaxial kneading excluder TEM26SS (made by TOSHIBA MACHINE CO., LTD). Then, the pellet which was obtained by melt kneading was dried by blowing drier. The viscosity of the obtained resin composition and the thermal conductivity of the highly thermally conductive resin article obtained from the resin composition were measured, and the results are shown in Table 4.

**Table 1**

| | | Example 1 | Example 2 | Example 3 | Example 4 | Example 5 | Example 6 | Example 7 | Example 8 |
|---|---|---|---|---|---|---|---|---|---|
| | Type | Silicone | Silicone | Silicone | Silicone | Acrylic resin | Acrylic resin | Acrylic resin | Acrylic resin |
| Resin | Component | Addition type silicone TSE 325 | Addition type silicone TSE 325 | Addition type silicone TSE 325 | Millable type silicone TSE 2913U | Methacrylate BPE-100 | Methacrylate BPE-100 | Methacrylate BPE-100 | Methacrylate BPE-100 |
| | Belnded amount | 10.0g | 10.0g | 10.0g | 100g | 5.0g | 5.0g | 7.0g | 7.0g |
| | Component | - | - | - | - | Methacrylate 3G | Methacrylate 3G | Methacrylate 3G | Methacrylate 3G |
| | Blended amount | - | - | - | - | 5.0g | 5.0g | 3.0g | 3.0g |
| Curing agent or so | Component | - | - | - | 2,4-dichlorobenzoyl peroxide | Benzoyl peroxide | Benzoyl peroxide | Benzoyl peroxide | Benzoyl peroxide |
| | Blended amount | - | - | - | 0.5g | 0.1g | 0.1g | 0.1g | 0.1g |
| Filler | Component | Aluminum nitride Grade H | Aluminum nitride E | Aluminum nitride A | Aluminum nitride B | Aluminum nitride C | Aluminum nitride D | Aluminum nitride E | Aluminum nitride E |
| | Blended amount | 40.0g | 20.0g | 20.0g | 200.0g | 10.0g | 30.0g | 45.0g | 45.0g |
| | Component | - | Alumina AX10-32 | Aluminum nitride G | Aluminum nitride G | Aluminum nitride G | Aluminum nitride G | - | - |
| | Blended amount | - | 20.0g | 25.0g | 200.0g | 20.0g | 15.0g | - | - |
| Acidic phosphate of general formula (1) | Component | Phosphanol RS-410 | Phosphanol RS-610 | Phosphanol GF-199 | Phosphanol RS-710 | Phosphanol RS-710 | Phosphanol RS-710 | Phosphanol RA-600 | Phosphanol RS-610 |
| | Blended amount | 0.1 g | 0.2g | 0.3g | 2.0g | 0.15g | 0.20g | 0.07g | 0.25g |
| Others | Component | - | - | - | - | - | - | - | - |
| | Blended amount | - | - | - | - | - | - | - | - |
| Viscosity | (Pa·s) | 1600 | 1300 | 2200 | - | 1900 | 3300 | 3800 | 2900 |
| Thermal conductivity | (W/mK) | 5.2 | 4.3 | 4.1 | 4.4 | 3.7 | 4.7 | 4.0 | 5.4 |

**Table 2**

| | | Example 9 | Example 10 | Example 11 | Example 12 | Example 13 | Example 14 | Example 15 | Example 16 |
|---|---|---|---|---|---|---|---|---|---|
| | Type | Acrylic resin | Acrylic resin | Polyimide resin | Polyimide resin | Polyurethane | Polyurethane | PPS | PPS |
| Resin | Component | Metahcrylate BPE-100 | Metahcrylate BPE-200 | Diamine | Diamine | Polyoxypropylene triol | Polyoxypropylene triol | PPS FZ-2100 | PPS Z-200-E5 |
| | Belnded amount | 7.0g | 5.0g | 29.2g | 29.2g | 10.0g | 10.0g | 100g | 100g |
| | Component | Methacrylate 3G | Methacrylate 3G | Tetracarboxylic acid | Tetracarboxylic acid | Diisocyanate | Diisocyanate | - | - |
| | Blended amount | 3.0g | 5.0g | 30.9g | 30.9g | 0.7g | 0.7g | - | - |
| Curing agent or so | Component | Benzoyl peroxide | Benzoyl peroxide | - | - | Dibutyltin dilaurate or so | Dibutyltin dilaurate or so | - | - |
| | Blended amount | 0.1 g | 0.1 g | - | - | 0.15g | 0.15g | - | - |
| Filler | Component | Aluminum nitride E | Aluminum nitride F | Aluminum nitride F | Aluminum nitride F | Aluminum nitride Grade JD | Aluminum nitride E | Aluminum nitride E | Aluminum nitride F |
| | Blended amount | 45.0g | 20.0g | 160g | 200g | 40.0g | 25.0g | 300g | 350g |
| | Component | - | Aluminum nitride G | Aluminum nitride G | Alumina AX10-32 | - | Aluminum nitride F | - | - |
| | Blended amount | - | 30.0g | 160g | 120g | - | 20.0g | - | - |
| Acidic phosphate of general formula (1) | Component | BYK-W9010 | Phosphanol RS-610 | Phosphanol RS-610 | Phosphanol RA-600 | Phosphanol RS-710 | Phosphanol RA-600 | Phosphanol RA-600 | Phosphanol RA-600 |
| | Blended amount | 0.25g | 0.25g | 1.2 g | 1.5 g | 0.2g | 0.2g | 2g | 2g |
| Others | Component | - | - | - | - | - | - | - | - |
| | Blended amount | - | - | - | - | - | - | - | - |
| Viscosity | (Pa·s) | 2500 | 3700 | - | - | 3800 | 4700 | - | - |
| Thermal conductivity | (W/mK) | 4.1 | 5.8 | 4.7 | 4.1 | 6.2 | 6.3 | 4.1 | 4.2 |

**Table 3**

| | | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|
| | Type | Silicone | Silicone | Silicone | Silicone | Silicone | Acrylic resin | Acrylic resin | Polyimide resin |
| Resin | Component | Addition type silicone TSE 325 | Addition type silicone TSE 325 | Addition type silicone TSE 325 | Addition type silicone TSE 325 | Addition type silicone TSE 325 | Methacrylate BPE-100 | Methacrylate BPE-100 | Diamine |
| | Belnded amount | 10.0g | 10.0g | 10.0g | 10.0g | 10.0g | 7.0g | 7.0g | 29.2g |
| | Component | - | - | - | - | - | Methacrylate 3G | Methacrylate 3G | Tetracarboxylic acid |
| | Blended amount | - | - | - | - | - | 3.0g | 3.0g | 30.9g |
| Curing agent or so | Component | - | - | - | - | - | Benzoyl peroxide | Benzoyl peroxide | - |
| | Blended amount | - | - | - | - | - | 0.1g | 0.1g | - |
| Filler | Component | Aluminum nitride Grade H | Aluminum nitride E | Aluminum nitride A | Aluminum nitride A | Aluminum nitride A | Alumina AKP-20 | Aluminum nitride E | Aluminum nitride F |
| | Blended amount | 40.0g | 20.0g | 20.0g | 20.0g | 20.0g | 40.0g | 45.0g | 160g |
| | Component | - | Alumina AX10-32 | Aluminum nitride G | Aluminum nitride G | Aluminum nitride G | - | - | Aluminum nitride G |
| | Blended amount | - | 20.0g | 25.0g | 25.0g | 25.0g | - | - | 160g |
| Acidic phosphate of general formula (1) | Component | - | - | - | - | - | Phosphanol RS-610 | - | - |
| | Blended amount | - | - | - | - | - | 0.25g | - | - |
| Others | Component | - | A-3 | Lauric acid | Pegnol L-4 | PX-200 | - | - | - |
| | Blended amount | - | 0.2g | 0.3g | 0.2g | 0.2g | - | - | - |
| Viscosity | (Pa·s) | 4700 | 3500 | 6300 | 5600 | 6200 | 7300 | 8400 | - |
| Thermal conductivity | (W/mK) | 3.1 | 2.5 | 2.8 | 3.0 | 2.6 | 2.3 | 3.3 | 3.5 |

**Table 4**

| | | Comparative example 9 | Comparative example 10 | Comparative example 11 | Comparative example 12 | Comparative example 13 | Comparative example 14 | Comparative example 15 |
|---|---|---|---|---|---|---|---|---|
| | Type | polyimide resin | Silicone | Polyurethane | Polyurethane | Polyurethane | Polyurethane | PPS |
| Resin | Component | Diamine | Addition type silicone TSE 325 | Polyoxypropylene triol | Polyoxypropylene triol | Polyoxypropylene triol | Polyoxypropylene triol | PPS Z-200-E5 |
| | Belnded amount | 29.2g | 10.0g | 10.0g | 10.0g | 10.0g | 10.0g | 100g |
| | Component | Tetracarboxylic acid | - | Diisocyanate | Diisocyanate | Diisocyanate | Diisocyanate | - |
| | Blended amount | 30.9g | - | 0.7g | 0.7g | 0.7g | 0.7g | - |
| Curing agent or so | Component | - | - | Dibutyltin dilaurate or so | Dibutyltin dilaurate or so | Dibutyltin dilaurate or so | Dibutyltin dilaurate or so | - |
| | Blended amount | - | - | 0.15g | 0.15g | 0.15g | 0.15g | - |
| Filler | Component | Aluminum nitride H | Aluminum nitride I | Aluminum nitride J | Alumina AKP-20 | Aluminum nitride Grade JD | Aluminum nitride Grade JD | Aluminum nitride F |
| | Blended amount | 320g | 40.0g | 40.0g | 40.0g | 40.0g | 40.0g | 350g |
| | Component | - | - | - | - | - | - | - |
| | Blended amount | - | - | - | - | - | - | - |
| Acidic phosphate of general formula (1) | Component | Phosphanol RS-610 (Surface treated) | Phosphanol RS-410 (Surface treated) | Phosphanol RS-710 (Surface treated) | Phosphanol RS-610 | - | - | - |
| | Blended amount | | | | 0.25g | - | - | - |
| Others | Component | - | - | - | - | - | PLENACT AL-M | - |
| | Blended amount | - | - | - | - | - | 0.2g | - |
| Viscosity | (Pa·s) | - | 3100 | 5700 | 7100 | 8300 | 7600 | - |
| Thermal conductivity | (W/mK) | 3.2 | 4.4 | 5.3 | 3.2 | 4.5 | 4.8 | 2.7 |

## Claims

1. A resin composition comprising an aluminum nitride particle, a heat-curable resin or a thermoplastic resin, and acidic phosphate expressed by the following general formula (1), wherein said resin composition is produced by mixing the aluminum nitride particles, the heat-curable resin or the thermoplastic resin and the acidic phosphate expressed by the following general formula (1). 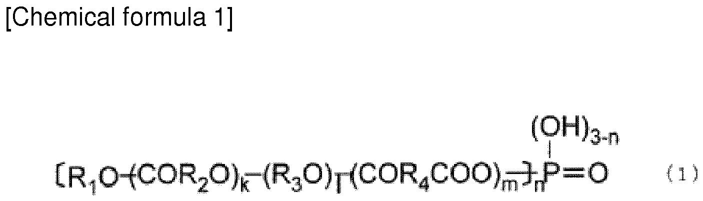 (in the above formula,
R₁: Saturated or unsaturated hydrocarbon group having carbon atoms of 4 to 20
R₂: Saturated hydrocarbon group having carbon atoms of 1 to 20
R₃: Saturated hydrocarbon group having carbon atoms of 2 or 3
R₄: Saturated or unsaturated hydrocarbon group having carbon atoms of 1 to 8
k: Integer of 0 to 20
I: Integer of 0 to 20
m: Integer of 0 to 20
n: 1 or 2, wherein
in case R₁, R₂, R₃ and R₄ are respectively present in plurality, then plurality of R₁, R₂, R₃ and R₄ may be the same or different groups respectively)

2. A production method of the resin composition as set forth in claim 1 **characterized by** mixing the aluminum nitride particles, the heat-curable resin or the thermoplastic resin, and the acidic phosphate expressed by the following general formula (1). 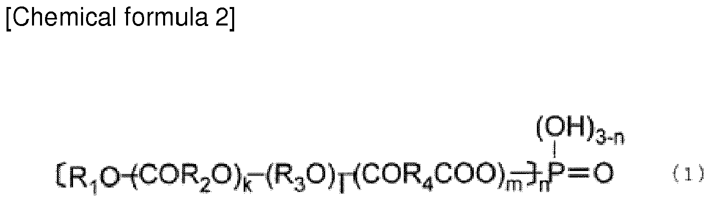 (in the above formula,
R₁: Saturated or unsaturated hydrocarbon group having carbon atoms of 4 to 20
R₂: Saturated hydrocarbon group having carbon atoms of 1 to 20
R₃: Saturated hydrocarbon group having carbon atoms of 2 or 3
R₄: Saturated or unsaturated hydrocarbon group having carbon atoms of 1 to 8
k: Integer of 0 to 20
I: Integer of 0 to 20
m: Integer of 0 to 20
n: 1 or 2, wherein
in case R₁, R₂, R₃ and R₄ are respectively present in plurality, then plurality of R₁, R₂, R₃ and R₄ may be the same or different groups respectively)

3. A highly thermally conductive resin molded article made by shaping and curing the resin composition as set forth in claim 1.

4. The resin composition as set forth in claim 1, wherein said aluminum nitride particles are water resistant aluminum nitride particles.

5. The resin composition as set forth in claim 1, wherein the heat-curable resin is at least one selected from the group consisting of silicone resin, acrylic resin, heat-curable imide resin, and urethane resin.

6. The resin composition as set forth in claim 1, wherein the thermoplastic resin is polyarylenesulfide.

## Amended claims

### Amended claims under Art. 19.1 PCT

**1.** A resin composition comprising an aluminum nitride particle, a heat-curable resin or a thermoplastic resin, and acidic phosphate expressed by below general formula (2), wherein said resin composition is produced by mixing the aluminum nitride particle, the heat-curable resin or the thermoplastic resin, and the acidic phosphate expressed by below general formula (2). 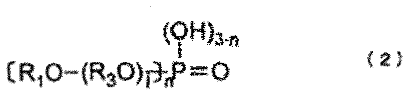 (in the above formula,
R₁: Saturated or unsaturated hydrocarbon group having carbon atoms of 4 to 20
R₃: Saturated hydrocarbon group having carbon atoms of 2 or 3
I: Integer of 0 to 20
n: 1 or 2, wherein
in case R₁ and R₃ are respectively present in plurality, then plurality of R₁ and R₃ may be the same or different groups respectively)

**2.** A production method of the resin composition as set forth in claim 1 **characterized by** mixing the aluminum nitride particle, the heat-curable resin or the thermoplastic resin, and the acidic phosphate expressed by below general formula (2). 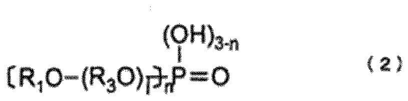 (in the above formula,
R₁: Saturated or unsaturated hydrocarbon group having carbon atoms of 4 to 20
R₃: Saturated hydrocarbon group having carbon atoms of 2 or 3
I: Integer of 0 to 20
n: 1 or 2, wherein
in case R₁ and R₃ are respectively present in plurality, then plurality of R₁ and R₃ may be the same or different groups respectively)

**3.** A highly thermally conductive resin molded article made by molding and curing the resin composition as set forth in claim 1.

**4.** The resin composition as set forth in claim 1, wherein said aluminum nitride particle is water resistant aluminum nitride particle.

**5.** The resin composition as set forth in claim 1, wherein the heat-curable resin is at least one selected from the group consisting of silicone resin, acrylic resin, heat-curable imide resin, and urethane resin.

**6.** The resin composition as set forth in claim 1, wherein the thermoplastic resin is polyarylenesulfide.
